# EUROPEAN PATENT APPLICATION

(11) **EP 4 539 514 A1**
(43) Date of publication of application: **16.04.2025**
(21) Application number: 22948558.6
(22) Date of filing: 30.06.2022
(51) Int. Cl.: H04W 4/38

(54) **OPERATION MODE SWITCHING METHOD AND APPARATUS, AND PROGRAM PRODUCT**

(71) Applicant: Huawei Technologies Co., Ltd., Shenzhen, Guangdong 518129 (CN)
(72) Inventor: HE, Jia, Shenzhen, Guangdong 518129 (CN); DU, Xianfeng, Shenzhen, Guangdong 518129 (CN); LI, Oupeng, Shenzhen, Guangdong 518129 (CN)
(74) Representative: Isarpatent
(86) International application number: PCT/CN2022/102951
(87) International publication number: WO 2024/000455

(57) **Abstract**

This application provides an operation mode switching method, an apparatus, and a program product, to switch a first communication apparatus and a second communication apparatus between different operation modes. The method includes: The first communication apparatus obtains capability information of the second communication apparatus, where the capability information indicates that the second communication apparatus supports one or more of a second transmit mode, a second receive mode, or a second transceiver mode. The first communication apparatus sends switching indication information to the second communication apparatus, where the switching indication information indicates one or more of the following: switching of the second communication apparatus from a first transmit mode to the second transmit mode, switching of the second communication apparatus from a first receive mode to the second receive mode, or switching of the second communication apparatus from a first transceiver mode to the second transceiver mode. The first communication apparatus sends a second signal in the second transmit mode or the second transceiver mode, or receives a second signal in the second receive mode or the second transceiver mode.

## Description

### TECHNICAL FIELD

This application relates to the field of communication, and more specifically, to an operation mode switching method, an apparatus, and a program product.

### BACKGROUND

A next generation mobile communication system can provide a sensing service while implementing communication, and can explore transmission, echo, reflection, and scattering of radio waves to sense and better understand a physical world. Integration of sensing and communication enables a cellular operator to provide many new services, such as better traffic management and a better positioning service. An integrated sensing and communication technology enables the communication system to perform the sensing service when providing communication. Integrated sensing and communication (which may also be referred to as a sensing and communication operation mode) generally uses an architecture of the communication system. Power consumption of the entire architecture is high, and power consumption of an entire site is as high as 100 watts to 1000 watts. A conventional sensing architecture (which may also be referred to as a sensing operation mode), for example, a radio frequency direct demodulation architecture commonly used by a vehicle-mounted radar, generally uses analog signal direct modulation, and has advantages such as a low baseband sampling rate and low power consumption (for example, 1 watt), but cannot meet a requirement of integrated sensing and communication.

Therefore, how the communication system is compatible with the sensing and communication operation mode and the sensing operation mode is an urgent problem to be resolved.

### SUMMARY

This application provides an operation mode switching method, an apparatus, and a program product, to switch two communication apparatuses between two operation modes (a sensing and communication operation mode and a sensing operation mode), which not only meets a requirement of integrated sensing and communication, but also enables the sensing operation mode to provide a normal sensing service when a communication function is in a sleep state or a low power consumption state, to ensure low system power consumption during the sensing service.

According to a first aspect, an operation mode switching method is provided, including: A first communication apparatus obtains capability information of a second communication apparatus, where the capability information indicates that the second communication apparatus supports one or more of a second transmit mode, a second receive mode, or a second transceiver mode. The first communication apparatus sends switching indication information to the second communication apparatus based on the capability information, where the switching indication information indicates one or more of the following: switching of the second communication apparatus from a first transmit mode to the second transmit mode, switching of the second communication apparatus from a first receive mode to the second receive mode, or switching of the second communication apparatus from a first transceiver mode to the second transceiver mode. A first signal transmitted in any one of the first transmit mode, the first receive mode, or the first transceiver mode is for communication and sensing. A second signal transmitted in any one of the second transmit mode, the second receive mode, or the second transceiver mode is for sensing. The first communication apparatus sends the second signal in the second transmit mode or the second transceiver mode, or receives the second signal in the second receive mode or the second transceiver mode.

Therefore, the first communication apparatus obtains the capability information indicating that the second communication apparatus supports one or more of the second transmit mode, the second receive mode, or the second transceiver mode (the second transmit mode, the second receive mode, or the second transceiver mode may be referred to as a sensing operation mode). The first communication apparatus initiates operation mode switching. The first communication apparatus is switched from the first transmit mode or the first transceiver mode (the first transmit mode or the first transceiver mode may be referred to as a sensing and communication operation mode) to the second transmit mode or the second transceiver mode (the sensing operation mode). In this way, a communication system is compatible with the sensing and communication operation mode and the sensing operation mode, and system power consumption is reduced in the sensing operation mode.

With reference to the first aspect, in a possible implementation of the first aspect, the capability information includes one or more of the following: a parameter of a received signal supported by the second communication apparatus, or a parameter of a sent signal supported by the second communication apparatus.

The parameter of the received signal supported by the second communication apparatus is carried in the capability information, so that the first communication apparatus can obtain the parameter of the received signal supported by the second communication apparatus, and the first communication apparatus can send the second signal with reference to the parameter of the received signal supported by the second communication apparatus. Therefore, mode switching effectiveness is improved.

The parameter of the sent signal supported by the second communication apparatus is carried in the capability information, so that the first communication apparatus can obtain the parameter of the sent signal supported by the second communication apparatus, and the first communication apparatus can accurately receive the second signal. Therefore, mode switching effectiveness is improved.

With reference to the first aspect, in a possible implementation of the first aspect, the switching indication information includes a parameter of the second signal.

The parameter of the second signal is carried in the switching indication information, so that the second communication apparatus can obtain a parameter of a received signal supported by the first communication apparatus, and the second communication apparatus can send the second signal with reference to the parameter of the received signal supported by the first communication apparatus. Therefore, the mode switching effectiveness is improved.

The parameter of the second signal is carried in the switching indication information, so that the second communication apparatus can obtain a parameter of a sent signal supported by the first communication apparatus, and the second communication apparatus can accurately receive the second signal. Therefore, the mode switching effectiveness is improved.

With reference to the first aspect, in a possible implementation of the first aspect, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

The switching waiting time, the switching cycle, the first guard interval, and the second guard interval are configured as the information preconfigured by the first communication apparatus and the second communication apparatus. The switching waiting time, the switching cycle, the first guard interval, and the second guard interval have been stored in the first communication apparatus and the second communication apparatus, and do not need to be sent by using signaling. Therefore, signaling overheads can be reduced.

With reference to the first aspect, in a possible implementation of the first aspect, the switching indication information further includes any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Parameters such as the switching waiting time, the switching cycle, the first guard interval, and the second guard interval are carried in the switching information, and the parameters carried in the switching information, such as the switching waiting time, the switching cycle, the first guard interval, and the second guard interval may change at different moments. Therefore, switching between different operation modes can be performed more flexibly.

With reference to the first aspect, in a possible implementation of the first aspect, the capability information may further include any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

The second communication apparatus determines the switching waiting time, the switching cycle, the first guard interval, and the second guard interval, and initiates a switching notification, so that the first communication apparatus and the second communication apparatus are flexibly switched between different operation modes.

With reference to the first aspect, in a possible implementation of the first aspect, the switching method further includes:
the first communication apparatus switches the first communication apparatus from the second transmit mode or the second transceiver mode to the first transmit mode or the first transceiver mode based on the second guard interval, or the first communication apparatus switches the first communication apparatus from the second receive mode or the second transceiver mode to the first receive mode or the first transceiver mode based on the second guard interval.

With reference to the first aspect, in a possible implementation of the first aspect, that the first communication apparatus sends the second signal in the second transmit mode or the second transceiver mode includes: A first sector of the first communication apparatus sends the second signal in the second transmit mode or the second transceiver mode. Alternatively, a first panel (panel) of the first communication apparatus sends the second signal in the second transmit mode or the second transceiver mode. Alternatively, a first port (port) of the first communication apparatus sends the second signal in the second transmit mode or the second transceiver mode.

The first sector, the first panel, and the first port may be some sectors, some panels, and some ports of the first communication apparatus. The first sector, the first panel, and the first port of the first communication apparatus send the second signal in the second transmit mode or the second transceiver mode, that is, the first sector, the first panel, and the first port of the first communication apparatus operate in the sensing mode. A remaining sector, a remaining panel, and a remaining port of the first communication apparatus may be in the first transmit mode or the first transceiver mode, that is, the remaining sector, the remaining panel, and the remaining port of the first communication apparatus may be in the sensing and communication mode. In this way, the first communication apparatus can perform both a sensing service and a sensing and communication service.

With reference to the first aspect, in a possible implementation of the first aspect, that the first communication apparatus receives the second signal in the second receive mode or the second transceiver mode includes: A first sector of the first communication apparatus receives the second signal in the second receive mode or the second transceiver mode. Alternatively, a first panel (panel) of the first communication apparatus receives the second signal in the second receive mode or the second transceiver mode. Alternatively, a first port (port) of the first communication apparatus receives the second signal in the second receive mode or the second transceiver mode.

The first sector, the first panel, and the first port may be some sectors, some panels, and some ports of the first communication apparatus. The first sector, the first panel, and the first port of the first communication apparatus receive the second signal in the second receive mode or the second transceiver mode, that is, the first sector, the first panel, and the first port of the first communication apparatus operate in the sensing mode. A remaining sector, a remaining panel, and a remaining port of the first communication apparatus may be in the first receive mode or the first transceiver mode, that is, the remaining sector, the remaining panel, and the remaining port of the first communication apparatus may be in the sensing and communication mode. In this way, the first communication apparatus can perform both a sensing service and a sensing and communication service.

According to a second aspect, a method for switching between different operation modes is provided, including: A second communication apparatus receives, in a first receive mode or a first transceiver mode, switching indication information sent by a first communication apparatus, where the switching indication information indicates one or more of the following: switching of the second communication apparatus from a first transmit mode to a second transmit mode, switching of the second communication apparatus from the first receive mode to a second receive mode, or switching of the second communication apparatus from the first transceiver mode to a second mode. A first signal transmitted in any one of the first transmit mode, the first receive mode, or the first transceiver mode is for communication and sensing. A second signal transmitted in any one of the second transmit mode, the second receive mode, or the second transceiver mode is for sensing. The second communication apparatus switches the second communication apparatus from the first transmit mode to the second transmit mode based on the switching indication information, or switches the second communication apparatus from the first receive mode to the second receive mode, or switches the second communication apparatus from the first transceiver mode to the second mode. The second communication apparatus receives the second signal in the second receive mode or the second transceiver mode, or sends the second signal in the second transmit mode or the second transceiver mode.

With reference to the second aspect, in a possible implementation of the second aspect, before the second communication apparatus receives, in the first receive mode or the first transceiver mode, the switching indication information sent by the first communication apparatus, the method for switching further includes: The second communication apparatus sends capability information to the first communication apparatus, where the capability information indicates that the second communication apparatus supports one or more of the second transmit mode, the second receive mode, or the second transceiver mode.

With reference to the second aspect, in a possible implementation of the second aspect, the capability information includes one or more of the following: a parameter of a received signal supported by the second communication apparatus, or a parameter of a sent signal supported by the second communication apparatus.

With reference to the second aspect, in a possible implementation of the second aspect, the switching indication information includes a parameter of the second signal.

With reference to the second aspect, in a possible implementation of the second aspect, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the second aspect, in a possible implementation of the second aspect, the switching indication information further includes any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the second aspect, in a possible implementation of the second aspect, the capability information may further include any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the second aspect, in a possible implementation of the second aspect, the method for switching further includes: The second communication apparatus switches the second communication apparatus from the second receive mode or the second transceiver mode to the first receive mode or the first transceiver mode based on the second guard interval. Alternatively, the second communication apparatus switches the second communication apparatus from the second transmit mode or the second transceiver mode to the first transmit mode or the first transceiver mode based on the second guard interval.

With reference to the second aspect, in a possible implementation of the second aspect, that the second communication apparatus receives the second signal in the second receive mode or the second transceiver mode includes: A first panel (panel) of the second communication apparatus receives the second signal in the second receive mode or the second transceiver mode. Alternatively, a first port (port) of the second communication apparatus receives the second signal in the second receive mode or the second transceiver mode.

With reference to the second aspect, in a possible implementation of the second aspect, that the second communication apparatus sends the second signal in the second transmit mode or the second transceiver mode includes: A first panel (panel) of the second communication apparatus sends the second signal in the second transmit mode or the second transceiver mode. Alternatively, a first port (port) of the second communication apparatus sends the second signal in the second transmit mode or the second transceiver mode.

According to a third aspect, a communication apparatus is provided. The communication apparatus is a first communication apparatus, including: a processing unit, configured to obtain capability information of a second communication apparatus, where the capability information indicates that the second communication apparatus supports one or more of a second transmit mode, a second receive mode, or a second transceiver mode; and a transceiver unit, configured to send switching indication information to the second communication apparatus based on the capability information, where the switching indication information indicates one or more of the following: switching of the second communication apparatus from a first transmit mode to the second transmit mode, switching of the second communication apparatus from a first receive mode to the second receive mode, or switching of the second communication apparatus from a first transceiver mode to the second transceiver mode. A first signal transmitted in any one of the first transmit mode, the first receive mode, or the first transceiver mode is for communication and sensing. A second signal transmitted in any one of the second transmit mode, the second receive mode, or the second transceiver mode is for sensing. The transceiver unit is further configured to: send the second signal in the second transmit mode or the second transceiver mode, or receive the second signal in the second receive mode or the second transceiver mode.

With reference to the third aspect, in a possible implementation of the third aspect, the capability information includes one or more of the following: a parameter of a received signal supported by the second communication apparatus, or a parameter of a sent signal supported by the second communication apparatus.

With reference to the third aspect, in a possible implementation of the third aspect, the switching indication information includes a parameter of the second signal.

With reference to the third aspect, in a possible implementation of the third aspect, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the third aspect, in a possible implementation of the third aspect, the switching indication information further includes any one or more of the following parameters: switching waiting time, a switching cycle, a first guard interval, and a second guard interval.

The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the third aspect, in a possible implementation of the third aspect, the capability information may further include any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the third aspect, in a possible implementation of the third aspect, the processing unit is further configured to switch the transceiver unit from the second transmit mode or the second transceiver mode to the first transmit mode or the first transceiver mode based on the second guard interval. Alternatively, the processing unit switches the transceiver unit from the second receive mode or the second transceiver mode to the first receive mode or the first transceiver mode based on the second guard interval.

With reference to the third aspect, in a possible implementation of the third aspect, that the transceiver unit is configured to send the second signal in the second transmit mode or the second transceiver mode includes: The transceiver unit corresponding to a first sector sends the second signal in the second transmit mode or the second transceiver mode. Alternatively, the transceiver unit corresponding to a first panel (panel) sends the second signal in the second transmit mode or the second transceiver mode. Alternatively, the transceiver unit corresponding to a first port (port) sends the second signal in the second transmit mode or the second transceiver mode.

With reference to the third aspect, in a possible implementation of the third aspect, that the transceiver unit receives the second signal in the second receive mode or the second transceiver mode includes: The transceiver unit corresponding to a first sector receives the second signal in the second receive mode or the second transceiver mode. Alternatively, the transceiver unit corresponding to a first panel (panel) receives the second signal in the second receive mode or the second transceiver mode.

Alternatively, the transceiver unit corresponding to a first port (port) receives the second signal in the second receive mode or the second transceiver mode.

According to a fourth aspect, a communication apparatus is provided. The communication apparatus is a second communication apparatus, including: a transceiver unit, configured to receive, in a first receive mode or a first transceiver mode, switching indication information sent by a first communication apparatus, where the switching indication information indicates one or more of the following: switching of the second communication apparatus from a first transmit mode to a second transmit mode, switching of the second communication apparatus from the first receive mode to a second receive mode, or switching of the second communication apparatus from the first transceiver mode to a second mode, where a first signal transmitted in any one of the first transmit mode, the first receive mode, or the first transceiver mode is for communication and sensing, and a second signal transmitted in any one of the second transmit mode, the second receive mode, or the second transceiver mode is for sensing; and a processing unit, configured to: switch the second communication apparatus from the first transmit mode to the second transmit mode based on the switching indication information, or switch the second communication apparatus from the first receive mode to the second receive mode, or switch the second communication apparatus from the first transceiver mode to the second mode. The transceiver unit is further configured to: receive the second signal in the second receive mode or the second transceiver mode, or send the second signal in the second transmit mode or the second transceiver mode.

With reference to the fourth aspect, in a possible implementation of the fourth aspect, the transceiver unit is further configured to send capability information to the first communication apparatus, where the capability information indicates that the second communication apparatus supports one or more of the second transmit mode, the second receive mode, or the second transceiver mode.

With reference to the fourth aspect, in a possible implementation of the fourth aspect, the capability information includes one or more of the following: a parameter of a received signal supported by the second communication apparatus, or a parameter of a sent signal supported by the second communication apparatus.

With reference to the fourth aspect, in a possible implementation of the fourth aspect, the switching indication information includes a parameter of the second signal.

With reference to the fourth aspect, in a possible implementation of the fourth aspect, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the fourth aspect, in a possible implementation of the fourth aspect, the switching indication information further includes any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the fourth aspect, in a possible implementation of the fourth aspect, the capability information may further include any one or more of the following parameters:
switching waiting time, a switching cycle, a first guard interval, and a second guard interval, where the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus.

The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

With reference to the fourth aspect, in a possible implementation of the fourth aspect, the processing unit is further configured to:
switch the transceiver unit from the second receive mode or the second transceiver mode to the first receive mode or the first transceiver mode based on the second guard interval; or the processing unit switches the transceiver unit from the second transmit mode or the second transceiver mode to the first transmit mode or the first transceiver mode based on the second guard interval.

With reference to the fourth aspect, in a possible implementation of the fourth aspect, that the transceiver unit is configured to receive the second signal in the second receive mode or the second transceiver mode includes: The transceiver unit corresponding to a first panel (panel) receives the second signal in the second operation mode or the second transceiver mode. Alternatively, the transceiver unit corresponding to a first port (port) receives the second signal in the second operation mode or the second transceiver mode.

With reference to the fourth aspect, in a possible implementation of the fourth aspect, that the second communication apparatus sends the second signal in the second transmit mode or the second transceiver mode includes: The transceiver unit corresponding to a first panel (panel) sends the second signal in the second operation mode or the second transceiver mode. Alternatively, the transceiver unit corresponding to a first port (port) sends the second signal in the second operation mode or the second transceiver mode.

According to a fifth aspect, a computer program product is provided. The computer program product includes instructions. When the instructions are run on a computer, the computer is enabled to perform the method in the first aspect or any possible implementation of the first aspect, or perform the method in the second aspect or any possible implementation of the second aspect.

According to a sixth aspect, a computer-readable storage medium is provided. The computer-readable storage medium stores a computer program. When being executed, the computer program is used to perform the method in the first aspect or any possible implementation of the first aspect, or perform the method in the second aspect or any possible implementation of the second aspect.

According to a seventh aspect, a chip system is provided. The chip system includes a processor, configured for a communication apparatus to implement functions in the foregoing aspects, such as generating, receiving, sending, or processing data and/or information related to the foregoing methods. In a possible design, the chip system further includes a memory. The memory is configured to store program instructions and data that are necessary for the communication apparatus. The chip system may include a chip, or may include a chip and another discrete component.

According to an eighth aspect, a communication system is provided. The communication system includes an access network device that has a function of implementing the methods and the possible designs in the first aspect and a terminal device that has a function of implementing the methods and the possible designs in the second aspect.

### BRIEF DESCRIPTION OF DRAWINGS

FIG. 1 is a diagram of an application scenario according to this application;
FIG. 2a is a diagram of an architecture of a monostatic integrated sensing and communication system according to this application;
FIG. 2b is a diagram of an architecture of a monostatic integrated sensing and communication system according to this application;
FIG. 2c is a diagram of an architecture of a bistatic integrated sensing and communication system according to this application;
FIG. 2d is a diagram of an architecture of a bistatic integrated sensing and communication system according to this application;
FIG. 3 is a schematic block diagram of a structure of a transmit end according to this application;
FIG. 4 is a schematic block diagram of a structure of a receive end according to this application;
FIG. 5 is a diagram of interaction in a method for switching between different operation modes according to this application;
FIG. 6 is a diagram of interaction in a method for switching between different operation modes according to this application;
FIG. 7 is a schematic sequence diagram of operation mode switching according to this application;
FIG. 8 is a diagram of interaction in a method for switching between different operation modes according to this application;
FIG. 9 is a schematic sequence diagram of operation mode switching according to this application;
FIG. 10 is a diagram of interaction in a method for switching between different operation modes according to this application;
FIG. 11 is a schematic sequence diagram of operation mode switching according to this application;
FIG. 12 is a diagram of interaction in a method for switching between different operation modes according to this application;
FIG. 13 is a schematic sequence diagram of operation mode switching according to this application;
FIG. 14 is a schematic sequence diagram of operation mode switching in a frequency division duplex system according to this application;
FIG. 15 is a schematic sequence diagram of operation mode switching in a frequency division duplex system according to this application;
FIG. 16 is a schematic sequence diagram of operation mode switching in a frequency division duplex system according to this application;
FIG. 17 is a schematic sequence diagram of operation mode switching in a frequency division duplex system according to this application;
FIG. 18 is a schematic block diagram of a communication apparatus according to an embodiment of this application;
FIG. 19 is a diagram of a structure of a terminal device according to this application; and
FIG. 20 is a diagram of a structure of an access network device according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, and a 5th generation (5th generation, 5G) communication system such as new radio (new radio, NR). In addition, the technical solutions may be further applied to an evolved system after 5G, for example, a 6th generation 6G communication system.

An access network device in embodiments of this application may be a device configured to communicate with a terminal device, may be a device, a base station, an access point, or a network device in an access network (radio access network, RAN), or may be a device that communicates with a wireless terminal over an air interface in an access network via one or more sectors. For example, the access network device may be an evolved NodeB (evolved NodeB, eNB or eNodeB) in the LTE system, a gNodeB (gNodeB, gNB) in an NR system, a radio controller in a cloud radio access network (cloud radio access network, CRAN) scenario, a relay station, a roadside unit (roadside unit, RSU), or a network device in an evolved communication network after 5G, or may be an access point (access point, AP) in a wireless local area network (wireless local area network, WLAN). This is not limited in embodiments of this application. For the NR system, one gNB may have one or more transmission reception points (Transmission Reception Points, TRPs), and a plurality of TRPs may belong to a same cell. Each TRP and a terminal may use an operation mode switching method described in embodiments of this application. In another scenario, the network device may be further divided into a control unit (Control Unit, CU) and a data unit (Data Unit, DU). There may be a plurality of DUs under one CU. Each DU and a terminal may use an operation mode switching method described in embodiments of this application.

The access network device provides a service for a cell. The terminal device communicates with the access network device by using a transmission resource (for example, a frequency domain resource and a time domain resource) used for the cell. The cell may be a cell corresponding to the access network device. The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are suitable for providing a high-rate data transmission service.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may be a device that provides voice/data connectivity for a user, for example, a handheld device, a vehicle-mounted device, or a wearable device that has a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, customer-premises equipment (customer-premises equipment, CPE), a smart point of sale (point of sale, POS) machine, a terminal device in an internet of things (internet of things, IoT) system, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a terminal device in a 5G network, a terminal device in the evolved communication system after 5G, or the like. This is not limited in embodiments of this application.

By way of example but not limitation, in embodiments of this application, the wearable device may also be referred to as a wearable intelligent device, and is a generic term for wearable devices that are developed through intelligent design on daily wearables by using wearable technologies, such as glasses, gloves, watches, clothing, and shoes. The wearable device is a portable device that can be directly worn on a body or integrated into clothes or an accessory of the user. The wearable device is not only a hardware device, but also implements a powerful function through software support, data exchange, and cloud interaction. In a broad sense, the wearable intelligent device includes a full-featured and large-sized device that can implement all or part of functions without depending on a smartphone, for example, a smartwatch or smart glasses, and a device that is dedicated to only one type of application function and needs to be used together with another device such as a smartphone, for example, a smart band or smart jewelry.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as the terminal device.

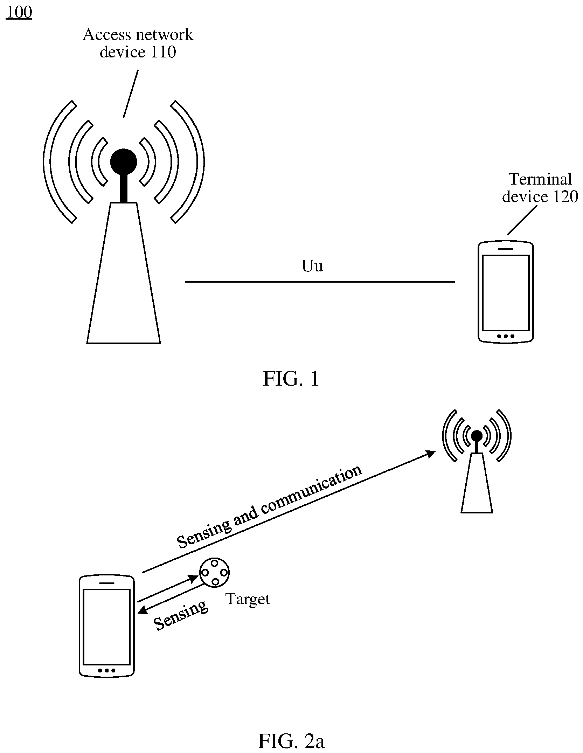

FIG. 1 is a diagram of an application scenario 100 according to this application. In FIG. 1, an access network device 110 and a terminal device 120 are included. In this embodiment of this application, one access network device may serve a plurality of terminal devices. FIG. 1 uses only one of the terminal devices as an example.

It should be understood that a communication system shown in FIG. 1 may further include more nodes, for example, another terminal device or another access network device. The access network devices or the terminal devices included in the communication system shown in FIG. 1 may be the foregoing access network devices or terminal devices in various forms. Details are not described one by one in the figure in this embodiment of this application.

In a next generation mobile communication system, due to an increase in a quantity of antennas and a larger bandwidth in a higher frequency band, the communication system can provide a sensing service while implementing communication. The sensing service means that a device emits electromagnetic energy into space, then may calculate information about an object based on an electromagnetic wave reflected by the object in the space, for example, parameters such as a location, a direction, a height, and a running speed of the object, and may further detect internal and external shapes and structures of the object based on the electromagnetic wave reflected by the object. The sensing service can explore transmission, echo, reflection, and scattering of radio waves to sense and better understand a physical world. An integrated sensing and communication system is used to integrate (integrate) an electromagnetic signal for communication and an electromagnetic signal for sensing, and can provide the sensing service while providing a communication service.

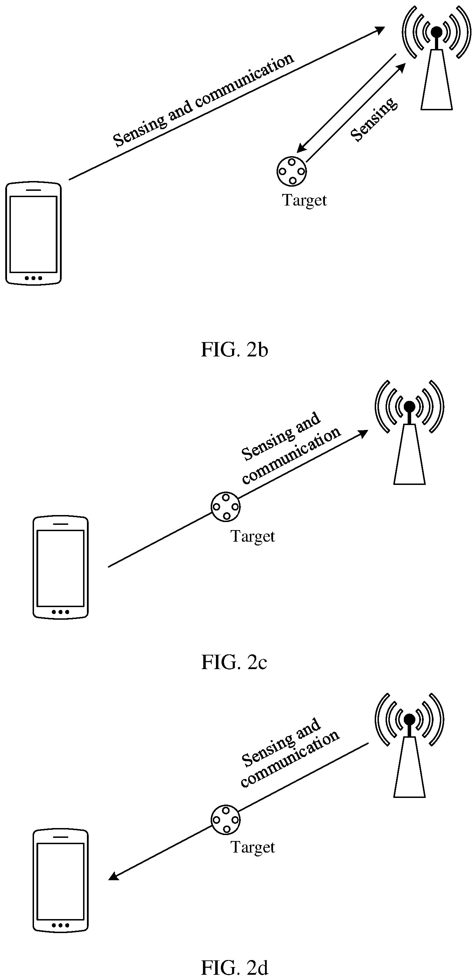

Depending on whether a receive end and a transmit end of a sensing signal are at a same site or at different sites, the system may be classified into a monostatic (Monostatic) integrated sensing and communication system and a bistatic (bistatic) integrated sensing and communication system. If the receive end and the transmit end of the sensing signal are at a same site, the system is the monostatic integrated sensing and communication system; or if the receive end and the transmit end of the sensing signal are at different sites, the system is the bistatic integrated sensing and communication system. FIG. 2 shows two typical architectures of the integrated sensing and communication system. FIG. 2a is a diagram of an architecture of the monostatic integrated sensing and communication system according to this application. In FIG. 2a, a terminal device and an access network device may operate in a sensing and communication operation mode. The terminal device may further operate in a sensing operation mode. The terminal device may transmit an analog signal to detect a target object. The terminal device receives an analog signal reflected by the target object, to determine information such as a location and a size of the target object. FIG. 2b is a diagram of an architecture of the monostatic integrated sensing and communication system according to this application. In FIG. 2b, a terminal device and an access network device may operate in a sensing and communication operation mode. The access network device may further operate in a sensing operation mode. The access network device may transmit an analog signal to detect a target object. The access network device receives an analog signal reflected by the target object, to determine information such as a location and a size of the target object. FIG. 2c is a diagram of an architecture of the bistatic integrated sensing and communication system according to this application. In FIG. 2c, a terminal device and an access network device may operate in a sensing and communication operation mode. The access network device determines information such as a location and a size of a target object based on an uplink signal sent by the terminal device. FIG. 2d is a diagram of an architecture of the bistatic integrated sensing and communication system according to this application. In FIG. 2d, a terminal device and an access network device may operate in a sensing and communication operation mode. The terminal device determines information such as a location and a size of a target object based on a downlink signal sent by the access network device.

Integration of sensing and communication enables a cellular operator to provide many new services, such as better traffic management and a better positioning service. Because sensing precision and resolution and a detection distance depend on a high frequency, a large bandwidth, a large array antenna, and the like, although using only a communication architecture meets a requirement of integrated sensing and communication, power consumption is high, where the power consumption is as high as 100 watts to 1000 watts. In addition, when a communication function is in a sleep state or a low power consumption state, a sensing function is greatly affected, and a normal sensing service cannot be provided. On the other hand, due to use of analog signal direct modulation, a conventional sensing architecture (for example, a radio frequency direct demodulation architecture commonly used by a vehicle-mounted radar) has advantages such as a low baseband sampling rate and low power consumption (for example, 1 watt), but cannot meet the requirement of integrated sensing and communication.

Therefore, this application provides a method for switching between different operation modes. In the method, a first communication apparatus and a second communication apparatus may have two operation modes (for example, a sensing and communication operation mode and a sensing operation mode), and the first communication apparatus and the second communication apparatus may be switched between the two operation modes. This not only meets the requirement of integrated sensing and communication, but also enables the sensing operation mode to provide the normal sensing service when the communication function is in the sleep state or the low power consumption state.

To better understand embodiments of this application, the following defines some terms in this application.

First operation mode: In this operation mode, a transmit end and a receive end have both a communication function and a sensing function. The first operation mode may also be referred to as a sensing and communication operation mode. The first operation mode includes one or more of a first transmit mode, a first receive mode, or a first transceiver mode. A first signal is a signal in the first operation mode. The first signal may be used by the transmit end and the receive end for communication, or may be used by the transmit end and the receive end for sensing.

In the first operation mode, all or some receivers of the receive end are in the first operation mode, and all or some transmitters of the transmit end are in the first operation mode.

Second operation mode: In this operation mode, a transmit end and a receive end have a sensing function, but do not have a communication function. The second operation mode may also be referred to as a minimum sensing operation mode. The second operation mode includes one or more of a second transmit mode, a second receive mode, or a second transceiver mode. A second signal is a signal in the second operation mode. The second signal may be used by the transmit end and the receive end for sensing.

In the second operation mode, all or some receivers of the receive end are in the second operation mode, and all or some transmitters of the transmit end are in the second operation mode.

To understand the first operation mode and the second operation mode more clearly, the following provides descriptions with reference to diagrams of a structure of the transmit end and a structure of the receive end.

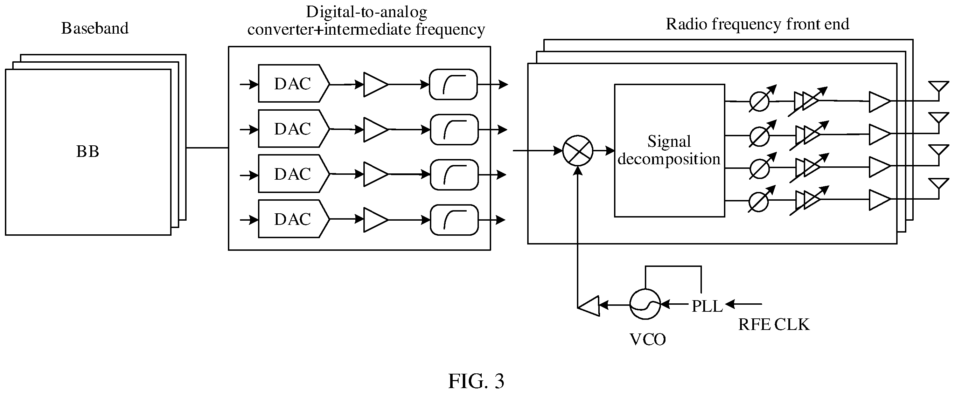

FIG. 3 is a schematic block diagram of the structure of the transmit end according to this application. The transmit end includes a baseband (baseband, BB), a digital intermediate frequency (digital intermediate frequency, DIF), and a radio frequency front end (radio frequency front end, RF front end).

In the first operation mode, the baseband BB generates a digital signal. The digital signal is transmitted to a digital-to-analog converter, and is converted into an analog signal. The analog signal is generally an intermediate frequency signal. The analog signal is transmitted to the radio frequency front end. At the radio frequency front end, a voltage-controlled oscillator (Voltage-Controlled Oscillator, VCO) generates a periodic frequency modulated signal, and modulates a frequency of the intermediate frequency analog signal to a fixed frequency for transmission, for example, a frequency of 10 GHz. In this case, the VCO outputs an analog signal, and a frequency of the analog signal is fixed. The first signal is a signal transmitted in the first operation mode, and may be a signal of a fixed frequency. In the first operation mode, all the units generally need to operate in a normal state, and in this case, power consumption is high.

In the second operation mode, the baseband BB and the digital intermediate frequency generally do not operate or only a part of the baseband BB and a part of the digital intermediate frequency operate. The VCO generates an analog signal, where a frequency of the analog signal generally changes with time, for example, a linear frequency modulated (linear frequency modulated, LFM) signal or a frequency modulated continuous wave (Frequency Modulated Continuous Wave, FMCW). The second signal is a signal transmitted in the second operation mode. In the second operation mode, only the radio frequency front end operates, and in this case, power consumption is low.

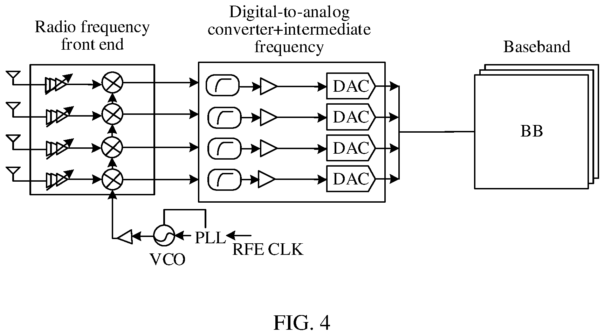

FIG. 4 is a schematic block diagram of the structure of the receive end according to this application. The receive end includes a baseband BB, a DIF, and an RF front end.

In the first operation mode, the receive end receives an analog signal, where the analog signal is the first signal. At the radio frequency front end, a VCO generates a frequency modulated signal of a fixed frequency, for example, a sine wave signal and a cosine wave signal of the fixed frequency, to demodulate the analog signal to an analog signal processable at a digital intermediate frequency. The analog signal is converted into a digital signal by a digital-to-analog converter, and the digital signal is processed by the baseband unit BB. In the first operation mode, all the units generally need to operate in a normal state, and in this case, power consumption is high.

In the second operation mode, the receive end receives an analog signal, where the analog signal is the second signal. The VCO dechirps the analog signal. A dechirped analog signal is input into the digital intermediate frequency, and is converted into a digital signal by an analog-to-digital converter. The digital signal is processed by the baseband unit BB. In the second operation mode, only a part of the digital intermediate frequency and a part of the baseband unit operate, and in this case, power consumption is low.

It should be understood that in this application, the receive end and the transmit end may be on different devices, or may be on a same device. For example, the transmit end is an access network device, and the receive end is a terminal device. For another example, the receive end and the transmit end are a same terminal device.

It should be further understood that the transmit end and the receive end may separately configure the second operation mode.

It should be further understood that the two operation modes may share all hardware units, and only the VCO is used for mode switching; or a working unit may be separately configured for the second operation mode. For example, the first operation mode and the second operation mode share the baseband unit, the digital intermediate frequency unit, and the radio frequency front end unit, and switching between the first operation mode and the second operation mode is performed via the VCO. For another example, the first operation mode and the second operation mode each correspond to a baseband unit, a digital intermediate frequency unit, and a radio frequency front end unit. For another example, the first operation mode and the second operation mode may share only some units, for example, the first operation mode and the second operation mode share the baseband unit, and the first operation mode and the second operation mode each correspond to the shared baseband unit, a digital intermediate frequency unit, and a radio frequency front end unit.

It should be further understood that parameters such as a waveform and a frame structure used in the first operation mode and the second operation mode may be different.

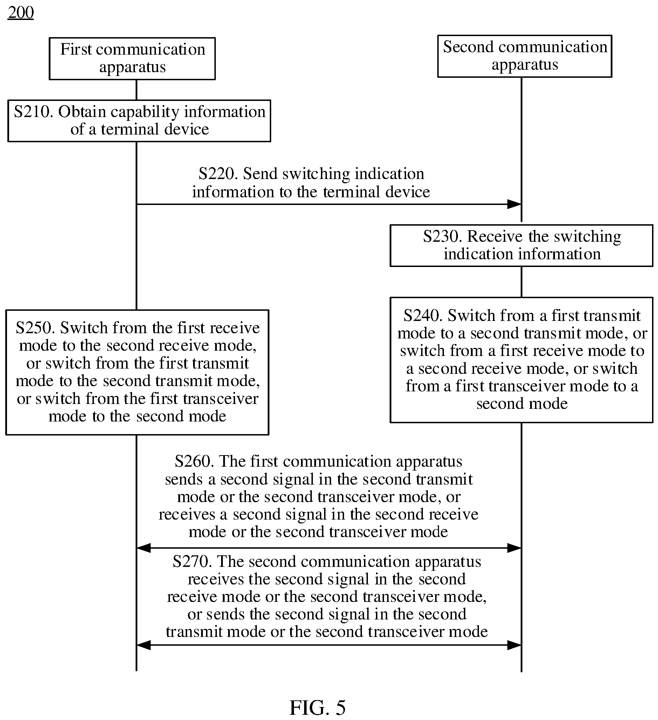

The following describes, in detail with reference to FIG. 5, the method for switching between different operation modes according to this application. FIG. 5 is a schematic flowchart of a method 200 for switching between different operation modes according to this application. The method 200 may be applied to the foregoing application scenario, and certainly may also be applied to another communication scenario. This is not limited in this application.

It should be further understood that in this embodiment of this application, the method is described by using an example in which the method is performed by the first communication apparatus and the second communication apparatus. By way of example but not limitation, the method may alternatively be performed by a chip, a chip system, a processor, or the like that is used in the first communication apparatus and the second communication apparatus.

As shown in FIG. 5, the method 200 shown in FIG. 5 may include S210 to S270. The following describes the steps in the method 200 in detail with reference to FIG. 5.

S210: The first communication apparatus obtains capability information of the second communication apparatus, where the capability information indicates that the second communication apparatus supports one or more of a second transmit mode, a second receive mode, or a second transceiver mode.

S220: The first communication apparatus sends, in a first transmit mode or a first transceiver mode, switching indication information to the second communication apparatus based on the capability information, where the switching indication information indicates one or more of the following: switching of the second communication apparatus from the first transmit mode to the second transmit mode, switching of the second communication apparatus from a first receive mode to the second receive mode, or switching of the second communication apparatus from the first transceiver mode to the second transceiver mode. A first signal transmitted in any one of the first transmit mode, the first receive mode, or the first transceiver mode is for communication and sensing. A second signal transmitted in any one of the second transmit mode, the second receive mode, or the second transceiver mode is for sensing.

S230: The second communication apparatus receives, in the first receive mode or the first transceiver mode, the switching indication information sent by the first communication apparatus.

S240: The second communication apparatus switches the second communication apparatus from the first transmit mode to the second transmit mode based on the switching indication information, or switches the second communication apparatus from the first receive mode to the second receive mode, or switches the second communication apparatus from the first transceiver mode to the second mode.

S250: Switch the first communication apparatus from the first receive mode to the second receive mode, or switch the first communication apparatus from the first transmit mode to the second transmit mode, or switch the first communication apparatus from the first transceiver mode to the second mode.

S260: The first communication apparatus sends the second signal in the second transmit mode or the second transceiver mode, or receives the second signal in the second receive mode or the second transceiver mode.

S270: The second communication apparatus receives the second signal in the second receive mode or the second transceiver mode, or sends the second signal in the second transmit mode or the second transceiver mode.

In the method 200, the first communication apparatus obtains the capability information indicating that the second communication apparatus supports a second operation mode. The first communication apparatus sends the switching indication information to the second communication apparatus based on the capability information, to switch the second communication apparatus from the first transmit mode to the second transmit mode, or switch the second communication apparatus from the first receive mode to the second receive mode, or switch the second communication apparatus from the first transceiver mode to the second transceiver mode. The first communication device is switched from the first receive mode to the second receive mode, the first communication device is switched from the first transmit mode to the second transmit mode, or the first communication device is switched from the first transceiver mode to the second mode. In this way, a communication system is compatible with a sensing and communication operation mode and a sensing operation mode, and system power consumption is reduced in the sensing operation mode.

Optionally, before the first communication apparatus obtains the capability information of the second communication apparatus, the method further includes: The second communication apparatus sends the capability information to the first communication apparatus.

Optionally, the capability information includes one or more of the following: a parameter of a received signal supported by the second communication apparatus, or a parameter of a sent signal supported by the second communication apparatus.

Optionally, the switching indication information includes a parameter of the second signal.

Optionally, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in the second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the switching indication information further includes any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in the second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the capability information may further include any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in the second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the method 200 further includes: The second communication apparatus switches the second communication apparatus from the second receive mode or the second transceiver mode to the first receive mode or the first transceiver mode based on the second guard interval. Alternatively, the second communication apparatus switches the second communication apparatus from the second transmit mode or the second transceiver mode to the first transmit mode or the first transceiver mode based on the second guard interval.

Optionally, the method 200 further includes: switching the first communication apparatus from the second transmit mode or the second transceiver mode to the first transmit mode or the first transceiver mode based on the second guard interval, or switching the first communication apparatus from the second receive mode or the second transceiver mode to the first receive mode or the first transceiver mode based on the second guard interval.

Optionally, that the first communication apparatus sends the second signal in the second transmit mode or the second transceiver mode includes:
a first sector of the first communication apparatus sends the second signal in the second transmit mode or the second transceiver mode; or
a first panel (panel) of the first communication apparatus sends the second signal in the second transmit mode or the second transceiver mode; or a first port (port) of the first communication apparatus sends the second signal in the second transmit mode or the second transceiver mode.

Optionally, that the first communication apparatus receives the second signal in the second receive mode or the second transceiver mode includes: A first sector of the first communication apparatus receives the second signal in the second receive mode or the second transceiver mode. Alternatively, a first panel (panel) of the first communication apparatus receives the second signal in the second receive mode or the second transceiver mode. Alternatively, a first port (port) of the first communication apparatus receives the second signal in the second receive mode or the second transceiver mode.

Optionally, that the second communication apparatus receives the second signal in the second receive mode or the second transceiver mode includes: A first panel (panel) of the second communication apparatus receives the second signal in the second receive mode or the second transceiver mode. Alternatively, a first port (port) of the second communication apparatus receives the second signal in the second receive mode or the second transceiver mode.

Optionally, that the second communication apparatus sends the second signal in the second transmit mode or the second transceiver mode includes: A first panel (panel) of the second communication apparatus sends the second signal in the second transmit mode or the second transceiver mode. Alternatively, a first port (port) of the second communication apparatus sends the second signal in the second transmit mode or the second transceiver mode.

The following describes, in detail by using an example in which the first communication apparatus is an access network device and the second communication apparatus is a terminal device, the method for switching between different operation modes provided in this application. The access network device and the terminal device do not constitute any limitation on the method for switching between different operation modes in this application. For example, the first communication apparatus may alternatively be a terminal device.

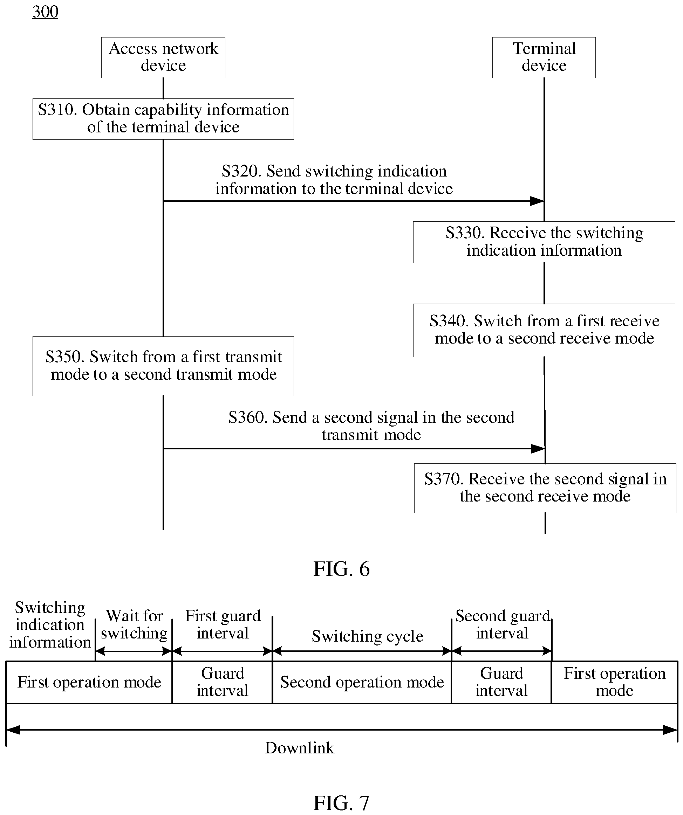

The following describes, in detail with reference to FIG. 6, the method for switching between different operation modes according to this application. FIG. 6 is a schematic flowchart of a method 300 for switching between different operation modes according to this application. The method 300 may be applied to the foregoing application scenario, and certainly may also be applied to another communication scenario. This is not limited in this application.

It should be further understood that in this embodiment of this application, the method is described by using an example in which the method is performed by the access network device and the terminal device. By way of example but not limitation, the method may alternatively be performed by a chip, a chip system, a processor, or the like that is used in the terminal device and the access network device.

As shown in FIG. 6, the method 300 shown in FIG. 6 may include S310 to S370. The following describes the steps in the method 300 in detail with reference to FIG. 6.

S310: The access network device obtains capability information of the terminal device, where the capability information indicates that the terminal device supports a second receive mode or a second transceiver mode.

The access network device may obtain the capability information of the terminal device in the following two manners.

In a possible implementation, the access network device receives, in a first operation mode, the capability information reported by the terminal device. In other words, the terminal device sends the capability information of the terminal device to the access network device, and correspondingly, the access network device receives the capability information sent by the terminal device.

In another possible implementation, when the terminal device accesses the access network device, the access network device considers by default that the terminal device supports the second receive mode or the second transceiver mode.

In a possible implementation, the capability information of the terminal device includes a parameter of a second signal supported by the terminal device in the second receive mode or the second transceiver mode. The parameter of the second signal may include parameters such as a bandwidth, a slope, and an initial phase of the second signal.

S320: When the access network device is in a first transmit mode or a first transceiver mode, the access network device sends switching indication information to the terminal device, where the switching indication information indicates switching of the terminal device from a first receive mode to the second receive mode or switching of the terminal device from the first transceiver mode to the second transceiver mode. A first signal transmitted in any one of the first transmit mode, the first receive mode, or the first transceiver mode is for communication and sensing. The first signal includes the switching indication information.

It should be understood that the parameter of the second signal supported by the terminal device may be the same as or different from a parameter of the second signal included in the switching indication information sent by the access network device. A bandwidth of the second signal is used as an example for description. A bandwidth of the second signal supported by the terminal device is 10 Hz to 30 Hz, and a bandwidth of the second signal configured by the access network device may be 10 Hz to 30 Hz, or a bandwidth of the second signal configured by the access network device may be less than 10 Hz to 30 Hz, for example, is 10 Hz to 15 Hz.

In a possible implementation, the switching indication information includes the parameter of the second signal. In other words, the access network device notifies, by using the switching indication information, the terminal device of the parameter of the second signal used in the second receive mode or the second transceiver mode.

In a possible implementation, the parameter of the second signal may be configured by using a communication protocol, or the parameter of the second signal may be a default parameter.

It should be understood that for switching of both the access network device and the terminal device between the first operation mode and a second operation mode, there are steps such as switching and re-locking of a VCO, channel switching of an analog-to-digital converter (analog-to-digital converter, ADC), and re-stabilization of a radio frequency channel, for example, a power amplifier (power amplifier, PA), and a sufficient guard interval needs to be reserved, to ensure that a signal is correctly received after operation mode switching. The guard interval is related to a capability of the access network device, a capability of the terminal device, a propagation delay, and the like.

To ensure that the signal is correctly received after operation mode switching, this application defines switching waiting time, a switching cycle, a first guard interval, and a second guard interval. The switching waiting time is used to determine duration, before switching, of the first operation mode of the access network device and the terminal device. The switching cycle indicates duration of operation in the second operation mode. The first guard interval indicates an interval for switching from the first operation mode to the second operation mode. The second guard interval indicates an interval for switching from the second operation mode to the first operation mode.

To describe an association relationship between the switching waiting time, the switching cycle, the first guard interval, and the second guard interval in time more clearly, the following uses FIG. 7 for description. FIG. 7 is a schematic sequence diagram of operation mode switching according to this application.

A start moment of switching waiting time of the access network device is a moment at which the access network device sends the switching indication information to the terminal device. The switching waiting time may be preset time, for example, 5 ms. When the preset time of the switching waiting time expires, the access network device performs operation mode switching from the first transmit mode to the second transmit mode. A start moment of a first guard interval is a moment at which the access network device starts to perform operation mode switching. In other words, the start moment of the first guard interval is started at a moment at which the preset time of the switching waiting time expires. The first guard interval may be preset time, for example, 3 ms. The access network device is switched from the first transmit mode to the second transmit mode in the first guard interval. When the preset time of the first guard interval expires, the access network device starts to operate in the second transmit mode. Duration of the second transmit mode is determined by a switching cycle. When the switching cycle reaches preset time, the access network device performs operation mode switching again from the second transmit mode to the first transmit mode. A start moment of a second guard interval is a start moment at which the access network device starts to perform operation mode switching. In other words, the start moment of the second guard interval is started when the switching cycle reaches the preset time. The second guard interval may be preset time, for example, 4 ms. When the preset time of the second guard interval expires, the access network device starts to operate in the first transmit mode.

It should be understood that the switching waiting time, the first guard interval, the second guard interval, and the switching cycle of the access network device described above are all for a transmitter of the access network device.

Optionally, in a case in which the access network device and the terminal device are time-synchronized, it may be considered that a moment at which the terminal device receives the switching indication information sent by the access network device is a start moment of switching waiting time of the terminal device. The switching waiting time of the terminal device may be equal to the switching waiting time of the access network device. When preset time of the switching waiting time expires, the terminal device performs operation mode switching from the first receive mode to the second receive mode. A start moment of a first guard interval is a moment at which the terminal device starts to perform operation mode switching. In other words, the start moment of the first guard interval is started when the preset time of the switching waiting time expires. The first guard interval may be preset time, for example, 3 ms. The terminal device is switched from the first receive mode to the second receive mode in the first guard interval. The terminal device starts to operate in the second receive mode at a moment at which the preset time of the first guard interval expires. Duration of the second receive mode is determined by a switching cycle. When the switching cycle reaches preset time, the terminal device performs operation mode switching again from the second receive mode to the first receive mode. A start moment of a second guard interval is a moment at which the terminal device starts to perform operation mode switching. In other words, the start moment of the second guard interval is started when the switching cycle reaches the preset time. The second guard interval may be preset time, for example, 4 ms. When the preset time of the second guard interval expires, the terminal device starts to operate in the first receive mode.

Optionally, in a case in which the access network device and the terminal device are not time-synchronized, a moment at which the access network device sends the switching indication information to the terminal device is earlier than a moment at which the terminal device receives the switching indication information sent by the access network device. A start moment of switching waiting time of the terminal device is a start moment of the switching waiting time of the terminal device. The switching waiting time of the terminal device may be slightly less than the switching waiting time of the access network device. For example, the switching waiting time of the access network device may be 5 ms, and the switching waiting time of the terminal device may be 4 ms. Therefore, the terminal device and the access network device can simultaneously perform operation mode switching and enter the first guard interval. A first guard interval, A switching cycle, and A second guard interval of the terminal device may be understood based on the foregoing descriptions for the terminal device.

It should be understood that the switching waiting time, the first guard interval, the second guard interval, and the switching cycle of the terminal device described above are all for a receiver of the terminal device.

It should be further understood that the switching waiting time, the first guard interval, the second guard interval, and the switching cycle may alternatively be defined by using a frame length, a quantity of frames, a subframe length, a quantity of subframes, a quantity of symbols, a quantity of subcarriers, and the like. For example, the switching waiting time may be defined as a length of two frames, the first guard interval may be defined as a length of one frame, the second guard interval may be defined as a length of one frame, and the switching cycle may be defined as a length of three frames.

Optionally, the first guard interval may be equal to the second guard interval.

Optionally, the switching waiting time may include the first guard interval. For example, in an implementation, the switching waiting time is 5 ms, the first guard interval is 3 ms, and the access network device operates in the second operation mode when the preset time of the first guard interval expires. In an implementation, the switching waiting time is 8 ms, and the access network device operates in the second operation mode when the preset time of the switching waiting time expires.

Optionally, the switching waiting time, the switching cycle, the first guard interval, and the second guard interval may be information preconfigured by the access network device and the terminal device. For example, the switching waiting time, the switching cycle, the first guard interval, and the second guard interval are specified in the communication protocol.

Optionally, the switching waiting time, the switching cycle, the first guard interval, and the second guard interval may be included in the switching indication information. For example, the switching indication information further includes any one or more of the following parameters: the switching waiting time, the switching cycle, the first guard interval, and the second guard interval.

S330: The terminal device receives, in the first receive mode or the first transceiver mode, the switching indication information sent by the access network device.

S340: The terminal device switches the terminal device from the first receive mode to the second receive mode based on the switching indication information, or switches the terminal device from the first transceiver mode to the second transceiver mode.

Specifically, the terminal device may be switched from the first operation mode to the second receive mode based on the switching waiting time, the switching cycle, and the first guard terminal, and operate in the second receive mode based on the parameter of the second signal.

In a possible implementation, one or more of the parameter of the second signal, the switching waiting time, the switching cycle, and the first guard interval may be carried in the switching indication information.

In a possible implementation, one or more of the parameter of the second signal, the switching waiting time, the switching cycle, and the first guard interval are determined based on a configuration of the communication protocol, or are default.

For example, in the second receive mode, some or all basebands and digital intermediate frequencies of the terminal device no longer operate, and a VCO outputs a demodulated analog signal.

Optionally, switching the terminal device from the first receive mode to the second receive mode or from the first transceiver mode to the second transceiver mode based on the switching indication information in step S340 includes: switching the terminal device from the first receive mode to the second transceiver mode or from the first transceiver mode to the second transceiver mode based on the switching indication information and the capability information of the terminal device.

Specifically, when the access network device sends the switching indication information to the terminal device, the switching indication information may carry parameters such as the parameter of the second signal, the first guard interval, and the second guard interval. The terminal device may determine, based on the parameter carried in the switching indication information and the capability information of the terminal device, for example, the parameter of the second signal supported by the terminal device, the first guard interval, and the second guard interval, whether to be switched from the first receive mode to the second receive mode or from the first transceiver mode to the second transceiver mode.

For example, when the access network device sends the switching indication information to the terminal device, the switching indication information may carry the bandwidth parameter of the second signal that is 5 GHz to 6 GHz and the first guard interval and the second guard interval that are 3 ms, the bandwidth parameter of the second signal supported by the terminal device is 5 GHz to 6 GHz, and the first guard interval and the second guard interval are 3 ms. In this case, the terminal device determines to perform operation mode switching from the first receive mode to the second receive mode or from the first transceiver mode to the second transceiver mode.

For another example, when the access network device sends the switching indication information to the terminal device, the switching indication information may carry the bandwidth parameter of the second signal that is 5 GHz to 6 GHz and the first guard interval and the second guard interval that are 3 ms, and the bandwidth parameter of the second signal supported by the terminal device is 6 GHz to 7 GHz. In this case, the terminal device determines not to perform operation mode switching.

S350: Switch the access network device from the first transmit mode to the second transmit mode or from the first transceiver mode to the second transceiver mode.

For example, after sending the switching indication information to the terminal device, the access network device is switched to the second operation mode based on the switching waiting time and the first guard interval. Some or all basebands and digital intermediate frequencies of the access network device no longer operate, and a VCO outputs an analog signal. The analog signal is sent to the terminal device for sensing via a radio frequency front end of the access network device.

S360: The access network device sends the second signal in the second transmit mode or the second transceiver mode, where the second signal sent by the access network device in the second transmit mode or the second transceiver mode is for sensing.

Optionally, in step S360, that the access network device sends the second signal in the second transmit mode or the second transceiver mode includes: The transmitter corresponding to a first sector of the access network device sends the second signal in the second transmit mode or the second transceiver mode. Alternatively, the transmitter corresponding to a first panel (panel) of the access network device sends the second signal in the second transmit mode or the second transceiver mode. Alternatively, the transmitter corresponding to a first port (port) of the access network device sends the second signal in the second transmit mode or the second transceiver mode.

Specifically, the access network device may select some sectors in which the terminal device is located, some panels (panels) of the access network device, or some ports (ports) of the access network device to operate in the second transmit mode or the second transceiver mode, and a remaining sector, a remaining panel (panel), or a remaining port (port) to operate in the first transmit mode or the first transceiver mode.

S370: The terminal device receives, in the second receive mode or the second transceiver mode, the second signal sent by the access network device.

Optionally, in step S370, that the terminal device receives, in the second receive mode or the second transceiver mode, the second signal sent by the access network device includes: The receiver corresponding to a first panel (panel) of the terminal device receives the second signal in the second receive mode or the second transceiver mode. Alternatively, the receiver corresponding to a first port (port) of the terminal device receives the second signal in the second receive mode or the second transceiver mode.

In the method 300, the access network device obtains the capability information indicating that the terminal device supports the second operation mode (a sensing operation mode). The access network device initiates operation mode switching, to switch the access network device from the first transmit mode (a sensing and communication operation mode) to the second transmit mode (a sensing operation mode) or switch the access network device from the first transceiver mode (a sensing and communication operation mode) to the second transceiver mode (a sensing operation mode), and switch the terminal device from the first receive mode (a sensing and communication operation mode) to the second receive mode (a sensing operation mode) or switch the terminal device from the first transceiver mode (a sensing and communication operation mode) to the second transceiver mode (a sensing operation mode). In this way, a communication system is compatible with the sensing and communication operation mode and the sensing operation mode, and system power consumption is reduced in the sensing operation mode.

Optionally, in step S310, the access network device may obtain capability information of a plurality of terminal devices, and the access network device determines a first terminal device based on the capability information of the plurality of terminal devices and a current operating status of the access network device, where the first terminal device is a terminal device that is determined by the access network device to be switched from the first operation mode to the second operation mode. The first terminal device includes at least one terminal device. Correspondingly, in step S330, the access network device sends the switching indication information to the first terminal device in the first operation mode.

Specifically, the access network device obtains capability information of a terminal device 1, a terminal device 2, and a terminal device 3. A bandwidth of the second signal supported by the terminal device 1 is 5 GHz to 6 GHz, a bandwidth of the second signal supported by the terminal device 3 is 5 GHz to 7 GHz, and a bandwidth of the second signal supported by the terminal device 3 is 7 GHz to 8 GHz. The access network device determines that the first terminal device is the terminal device 1 and the terminal device 3. The access network device sends the switching indication information to the terminal device 1 and the terminal device 3 in the first operation mode.

The foregoing steps describe a process of switching the transmitter of the access network device and the receiver of the terminal device from the first operation mode to the second operation mode. The following describes how to switch the transmitter of the access network device and the receiver of the terminal device from the second operation mode to the first operation mode.

The access network device is switched from the second transmit mode or the second transceiver mode to the first transmit mode or the first transceiver mode based on the second guard interval. The terminal device is switched from the second receive mode or the second transceiver mode to the first receive mode or the first transceiver mode based on the second guard interval.

In a possible implementation, the access network device and the terminal device start timing of the second guard interval when the switching cycle expires. The access network device is switched from the second transmit mode or the second transceiver mode to the first transmit mode or the first transceiver mode in the second guard interval. The terminal device is switched from the second receive mode or the second transceiver mode to the first receive mode or the first transceiver mode in the second guard interval. When the second guard interval expires, the access network device operates in the first transmit mode or the first transceiver mode, and the terminal device operates in the first receive mode or the first transceiver mode.

Therefore, the access network device obtains the capability information indicating that the terminal device supports one or more of the second transmit mode, the second receive mode, or the second transceiver mode (the second transmit mode, the second receive mode, or the second transceiver mode may be referred to as a sensing operation mode). The access network device initiates operation mode switching, to switch the access network device from the first transmit mode or the first transceiver mode (the first transmit mode or the first transceiver mode may be referred to as a sensing and communication operation mode) to the second transmit mode or the second transceiver mode (the sensing operation mode), and switch the terminal device from the first receive mode or the first transceiver mode to the second receive mode or the second transceiver mode. In this way, the communication system is compatible with the sensing and communication operation mode and the sensing operation mode, and the system power consumption is reduced in the sensing operation mode.

The method 300 describes a process in which the access network device initiates operation mode switching. An operation mode switching process may alternatively be initiated by the terminal device. The following describes, by using a method 400, a process in which the terminal device initiates operation mode switching.

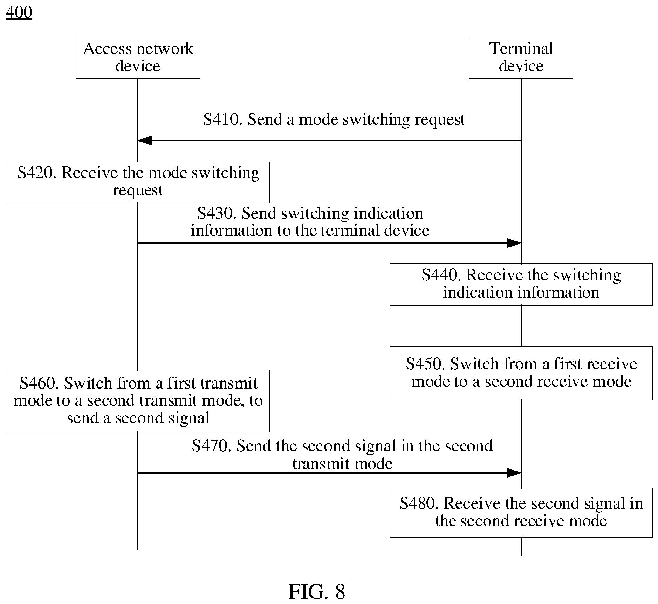

The following describes, in detail with reference to FIG. 8, the method for switching between different operation modes according to this application. FIG. 8 is a schematic flowchart of the method 400 for switching between different operation modes according to this application. The method 400 may be applied to the foregoing application scenario, and certainly may also be applied to another communication scenario. This is not limited in this application.

It should be further understood that in this embodiment of this application, the method is described by using an example in which the method is performed by the access network device and the terminal device. By way of example but not limitation, the method may alternatively be performed by a chip, a chip system, a processor, or the like that is used in the terminal device and the access network device.

As shown in FIG. 8, the method 400 shown in FIG. 8 may include S410 to S480. The following describes the steps in the method 400 in detail with reference to FIG. 8.

S410: The terminal device sends a mode switching request to the access network device in a first transmit mode or a first transceiver mode, where the mode switching request is used to request switching of the terminal device from a first receive mode or the first transceiver mode to a second receive mode or a second transceiver mode, the mode switching request includes capability information of the terminal device, and the capability information indicates that the terminal device supports the second receive mode or the second transceiver mode.

S420: The access network device receives, in the first receive mode or the first transceiver mode, the mode switching request sent by the terminal device.

It should be understood that in a possible implementation, when the terminal device accesses the access network device, the access network device considers by default that a receiver of the terminal device supports a second operation mode. In this case, the mode switching request may not include the capability information of the terminal device.

Optionally, the capability information of the terminal device includes a parameter of a second signal supported by the terminal device in the second receive mode or the second transceiver mode. The parameter of the second signal may include parameters such as a bandwidth, a slope, and an initial phase of the second signal.

Optionally, the capability information of the terminal device includes switching waiting time, a switching cycle, a first guard interval, and a second guard interval.

Optionally, the switching waiting time, the switching cycle, the first guard interval, and the second guard interval may be information preconfigured by the access network device and the terminal device. For example, the switching waiting time, the switching cycle, the first guard interval, and the second guard interval are specified in a communication protocol.

For descriptions of the switching waiting time, the switching cycle, the first guard interval, and the second guard interval, refer to the corresponding descriptions in the method 300. Details are not described herein again.

Optionally, in step S420, the access network device may receive capability information of a plurality of terminal devices, and the access network device determines a first terminal device based on the capability information of the plurality of terminal devices and a current operating status of the access network device, where the first terminal device is a terminal device that is determined by the access network device to be switched from a first operation mode to the second operation mode. The first terminal device includes at least one terminal device. Correspondingly, in step S430, the access network device sends switching indication information to the first terminal device in the first operation mode.

S430: The access network device sends the switching indication information to the terminal device in the first transmit mode or the first transceiver mode, where the switching indication information indicates switching of the terminal device from the first receive mode to the second receive mode or switching of the terminal device from the first transceiver mode to the second transceiver mode. A first signal sent by the access network device in the first transmit mode or the first transceiver mode is for communication and sensing. The first signal includes the switching indication information.

It should be understood that the switching indication information sent by the access network device to the terminal device in the first transmit mode or the first transceiver mode may be response information that notifies the terminal device whether to perform switching. The access network device may determine, based on an operating status of the access network device, whether to respond to the mode switching request of the terminal device. For example, if the access network device receives only a mode switching request sent by a current terminal device, and another terminal device does not need to perform sensing, the access network device may not perform mode switching. For another example, if the access network device receives a mode switching request sent by a current terminal device, but capability information of the terminal device differs greatly from that of another terminal device, the access network device may not perform mode switching.

S440: The terminal device receives, in the first receive mode or the first transceiver mode, the switching indication information sent by the access network device.

S450: The terminal device switches the terminal device from the first receive mode to the second receive mode based on the switching indication information, or switches the terminal device from the first transceiver mode to the second transceiver mode.

S460: Switch the access network device from the first transmit mode to a second transmit mode or from the first transceiver mode to the second transceiver mode.

S470: The access network device sends the second signal in the second transmit mode or the second transceiver mode, where the second signal sent by the access network device in the second transmit mode or the second transceiver mode is for sensing.

S480: The terminal device receives, in the second receive mode or the second transceiver mode, the second signal sent by the access network device.

It should be understood that step S450 to step S480 may be understood with reference to step S340 to step S370 in the method 300. To avoid repetition, details are not described herein again.

Therefore, the terminal device initiates, to the access network device, switching from the first operation mode (a sensing and communication operation mode) to the second operation mode (a sensing operation mode), and the access network device is switched from the first operation mode (the sensing and communication operation mode) to the second operation mode in response to the terminal device. In this way, a communication system is compatible with the sensing and communication operation mode and the sensing operation mode, and system power consumption is reduced in the sensing operation mode.

Optionally, the method 400 may further include the following steps:
switching the access network device from the second transmit mode or the second transceiver mode to the first transmit mode or the first transceiver mode based on the second guard interval; and switching the terminal device from the second receive mode or the second transceiver mode to the first receive mode or the first transceiver mode based on the second guard interval.

For details, refer to the corresponding descriptions in the method 300. The details are not described herein again.

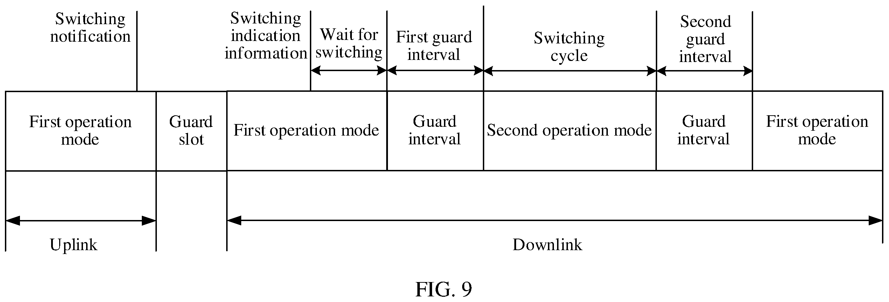

To describe a sequence process of the method 400 more clearly, the following uses FIG. 9 for description. FIG. 9 is a schematic sequence diagram of operation mode switching according to this application.

The terminal device initiates an operation mode switching notification in the first transmit mode in an uplink direction (for example, the access network device receives, in the first receive mode, the capability information reported by the terminal device, where the capability information indicates that the terminal device supports the second receive mode or the second transceiver mode). Uplink communication ends, and downlink communication starts after a guard slot. The access network device sends a switching response message to the terminal device in the first transmit mode in a downlink direction (for example, the access network device sends the switching indication information to the terminal device in the first operation mode). When a propagation delay is ignored, both the access network device and the terminal device enter the switching waiting time. When the switching waiting time expires, the access network device and the terminal device enter the first guard interval. When the first guard interval expires, the access network device is switched from the first transmit mode or the first transceiver mode to the second transmit mode or the second transceiver mode, and the terminal device is switched from the first receive mode or the first transceiver mode to the second receive mode or the second transceiver mode. When the switching cycle expires, the access network device and the terminal device enter the second guard interval. When the second guard interval expires, the access network device is switched from the second transmit mode or the second transceiver mode to the first transmit mode or the first transceiver mode, and the terminal device is switched from the second receive mode or the second transceiver mode to the first receive mode or the first transceiver mode.

The method 300 and the method 400 describe how the access network device and the terminal device perform switching about the operation mode during downlink communication, that is, how to perform a sensing process during downlink communication. The following describes, by using a method 500 and a method 600, how the access network device and the terminal device perform switching about the operation mode during uplink communication, that is, how to perform a sensing process during uplink communication.

The method 500 describes a process in which the access network device initiates operation mode switching. However, mode switching occurs in an uplink communication process, that is, a sensing mode is used in the uplink communication process.

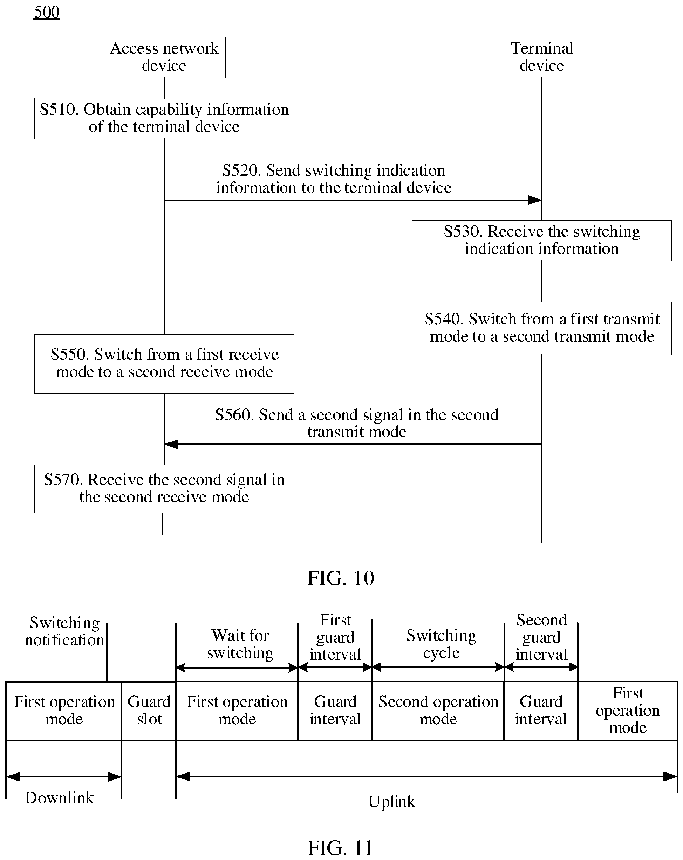

As shown in FIG. 10, the method 500 shown in FIG. 10 may include S510 to S570. The following describes the steps in the method 500 in detail with reference to FIG. 10.

S510: The access network device obtains capability information of the terminal device, where the capability information indicates that the terminal device supports a second transmit mode or a second transceiver mode.

For obtaining the capability information of the terminal device by the access network device, refer to the descriptions in the method 300. Details are not described herein again.

In a possible implementation, the capability information of the terminal device includes a parameter of a second signal supported by the terminal device in the second transmit mode or the second transceiver mode. The parameter of the second signal may include parameters such as a bandwidth, a slope, and an initial phase of the second signal.

S520: The access network device sends switching indication information to the terminal device in a first transmit mode, where the switching indication information indicates switching of the terminal device from the first transmit mode to the second transmit mode or switching of the terminal device from a first transceiver mode to the second transceiver mode. A first signal transmitted in any one of the first transmit mode, a first receive mode, or the first transceiver mode is for communication and sensing. The first signal includes the switching indication information.

In a possible implementation, the switching indication information includes the parameter of the second signal. In other words, the access network device notifies, by using the switching indication information, the terminal device of the parameter of the second signal used in a second receive mode or the second transceiver mode.

In a possible implementation, the parameter of the second signal may be configured by using a communication protocol, or the parameter of the second signal may be a default parameter.

Optionally, the switching indication information may further include any one or more of the following parameters: switching waiting time, a first guard interval, a second guard interval, and a switching cycle.

It should be understood that the switching waiting time, the first guard interval, the second guard interval, and the switching cycle may be understood with reference to the descriptions in the method 300. To avoid repetition, details are not described herein again.

It should be further understood that switching waiting time, a first guard interval, a second guard interval, and a switching cycle in uplink switching may be different from switching waiting time, a first guard interval, a second guard interval, and a switching cycle in downlink switching.

S530: The terminal device receives, in the first receive mode or the first transceiver mode, the switching indication information sent by the access network device.

S540: The terminal device switches the terminal device from the first transmit mode to the second transmit mode based on the switching indication information, or switches the terminal device from the first transceiver mode to the second transceiver mode.

Specifically, the terminal device may be switched from the first transmit mode to the second transmit mode based on the switching waiting time, the switching cycle, and the first guard interval, or switch the terminal device from the first transceiver mode to the second transceiver mode, and operate in the second transmit mode or the second transceiver mode based on the parameter of the second signal.

In a possible implementation, one or more of the parameter of the second signal, the switching waiting time, the switching cycle, and the first guard interval may be carried in the switching indication information.

In a possible implementation, one or more of the parameter of the second signal, the switching waiting time, the switching cycle, and the first guard interval are determined based on a configuration of the communication protocol, or are default.

For example, in the second transmit mode, some or all basebands and digital intermediate frequencies of the terminal device no longer operate, and a VCO outputs a demodulated analog signal.

Optionally, in step S540, the terminal device may perform operation mode switching after uplink communication data is completed. For example, the terminal device may first send the uplink communication data to the access network device in the first transmit mode. After the terminal device sends all the uplink communication data, the terminal device starts timing of the switching waiting time. When the switching waiting time expires, the terminal device starts a start moment of the first guard interval. When preset time of the first guard interval expires, the terminal device is switched from the first transmit mode to the second transmit mode, or the terminal device is switched from the first transceiver mode to the second transceiver mode.

Optionally, in step S540, the terminal device may transmit uplink communication data while performing operation mode switching. For example, when the terminal device is in an uplink time period, the terminal device starts timing of the switching waiting time. In addition, within timing of the switching waiting time, a transmitter of the terminal device may first send the uplink communication data to the access network device in the first transmit mode. When the switching waiting time expires, the terminal device starts a start moment of the first guard interval. When the first guard interval expires, the terminal device is switched from the first transmit mode to the second transmit mode, or the terminal device is switched from the first transceiver mode to the second transceiver mode.

S550: Switch the access network device from the first receive mode to the second receive mode, or switch the access network device from the first transceiver mode to the second transceiver mode.

For example, after sending the switching indication information to the terminal device, the access network device is switched to the second receive mode or the second transceiver mode based on the switching waiting time and the first guard interval.

Optionally, in step S550, the access network device may perform operation mode switching after the uplink communication data is completed. For example, after receiving the uplink communication data sent by the terminal device, the access network device may start timing of the switching waiting time. When the switching waiting time expires, the access network device starts a start moment of the first guard interval. When preset time of the first guard interval expires, the access network device is switched from the first receive mode to the second receive mode or from the first transceiver mode to the second transceiver mode.

Optionally, in step S550, the access network device may transmit the uplink communication data while performing operation mode switching. For example, the access network device may enter the uplink time period, and the access network device starts timing of the switching waiting time and receives the uplink communication data sent by the terminal device. When the switching waiting time expires, the access network device starts a start moment of the first guard interval. When preset time of the first guard interval expires, the access network device is switched from the first receive mode to the second receive mode or from the first transceiver mode to the second transceiver mode.

S560: The terminal device sends the second signal to the access network device in the second transmit mode or the second transceiver mode.

Optionally, in step S560, that the terminal device sends the second signal to the access network device in the second transmit mode or the second transceiver mode includes: The transmitter corresponding to a first panel (panel) of the terminal device sends the second signal in the second transmit mode or the second transceiver mode. Alternatively, the transmitter corresponding to a first port (port) of the terminal device sends the second signal in the second transmit mode or the second transceiver mode.

S570: The access network device receives, in the second receive mode or the second transceiver mode, the second signal sent by the terminal device.

Optionally, in step S570, that the access network device receives the second signal in the second receive mode or the second transceiver mode includes: A receiver corresponding to a first sector of the access network device receives the second signal in the second receive mode or the second transceiver mode. Alternatively, a receiver corresponding to a first panel (panel) of the access network device receives the second signal in the second receive mode or the second transceiver mode. Alternatively, a receiver corresponding to a first port (port) of the access network device receives the second signal in the second receive mode or the second transceiver mode.

In the method 500, the access network device obtains the capability information indicating that the terminal device supports a second operation mode (a sensing operation mode). The access network device initiates operation mode switching, to switch the access network device from the first receive mode (a sensing and communication operation mode) to the second receive mode (a sensing operation mode) or switch the access network device from the first transceiver mode (a sensing and communication operation mode) to the second transceiver mode (a sensing operation mode), and switch the terminal device from the first transmit mode (a sensing and communication operation mode) to the second transmit mode (a sensing operation mode) or switch the terminal device from the first transceiver mode (the sensing and communication operation mode) to the second transceiver mode (the sensing operation mode). In this way, a communication system is compatible with the sensing and communication operation mode and the sensing operation mode, and system power consumption is reduced in the sensing operation mode.

Optionally, in step S510, the access network device may obtain capability information of a plurality of terminal devices, and the access network device determines a first terminal device based on the capability information of the plurality of terminal devices and a current operating status of the access network device, where the first terminal device is a terminal device that is determined by the access network device to be switched from a first operation mode to the second operation mode. The first terminal device includes at least one terminal device. Correspondingly, in step S520, the access network device sends the switching indication information to the first terminal device in the first transmit mode or the first transceiver mode.

Optionally, the method 500 may further include: switching the access network device from the second receive mode or the second transceiver mode to the first receive mode or the first transceiver mode based on the second guard interval; and switching the terminal device from the second transmit mode or the second transceiver mode to the first transmit mode or the first transceiver mode based on the second guard interval.

To describe a sequence process of the method 500 more clearly, the following uses FIG. 11 for description. FIG. 11 is a schematic sequence diagram of operation mode switching according to this application.

The access network device initiates a switching notification in the first transmit mode or the first transceiver mode in a downlink direction (for example, the access network device sends the switching indication information to the terminal device). Downlink communication ends, and uplink communication starts after a guard slot. When a propagation delay is ignored, both the access network device and the terminal device enter the switching waiting time. When the switching waiting time expires, the access network device and the terminal device enter the first guard interval. When the first guard interval expires, the access network device is switched from the first receive mode to the second receive mode, or the access network device is switched from the first transceiver mode to the second transceiver mode, and the terminal device is switched from the first transmit mode to the second transmit mode, or the terminal device is switched from the first transceiver mode to the second receiver mode. When the switching cycle expires, the access network device and the terminal device enter the second guard interval. When the second guard interval expires, the access network device is switched from the second receive mode to the first receive mode, or the access network device is switched from the second transceiver mode to the first transceiver mode, and the terminal device is switched from the second transmit mode to the first transmit mode, or the terminal device is switched from the second transceiver mode to the first transceiver mode.

The method 500 describes a process in which the access network device initiates operation mode switching. However, mode switching occurs in an uplink communication process, that is, a sensing mode is used in the uplink communication process. An operation mode switching process may alternatively be initiated by the terminal device. The following describes, by using the method 600, a process in which the terminal device initiates operation mode switching. Mode switching occurs in the uplink communication process, that is, the sensing mode is used in the uplink communication process.

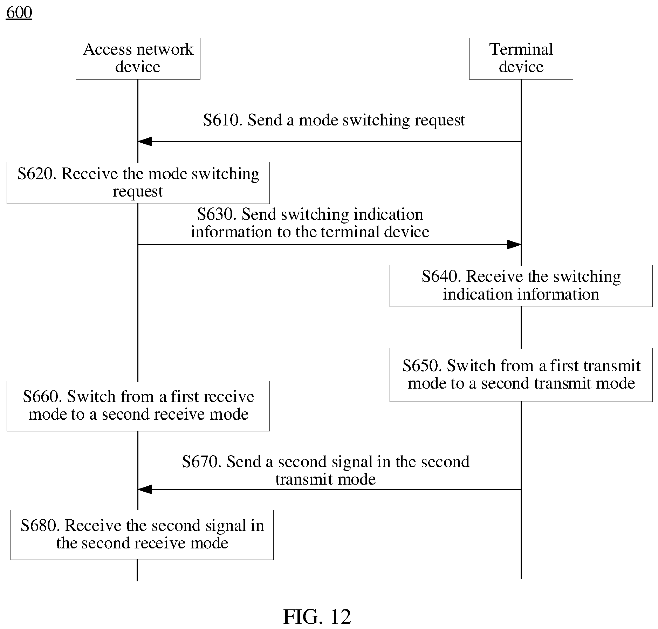

As shown in FIG. 12, the method 600 shown in FIG. 12 may include S610 to S680. The following describes the steps in the method 600 in detail with reference to FIG. 12.

S610: The terminal device sends a mode switching request to the access network device in a first transmit mode or a first transceiver mode, where the mode switching request is used to request switching of the terminal device from a first receive mode or the first transceiver mode to a second receive mode or a second transceiver mode, the mode switching request includes capability information of the terminal device, and the capability information indicates that a transmitter of the terminal device supports a second transmit mode or the second transceiver mode.

S620: The access network device receives, in the first receive mode or the first transceiver mode, the mode switching request sent by the terminal device.

It should be understood that in a possible implementation, when the terminal device accesses the access network device, the access network device considers by default that the transmitter of the terminal device supports a second operation mode. In this case, the mode switching request may not include the capability information of the terminal device.

Optionally, the capability information of the terminal device includes a parameter of a second signal supported by the terminal device in the second receive mode or the second transceiver mode. The parameter of the second signal may include parameters such as a bandwidth, a slope, and an initial phase of the second signal.

Optionally, the parameter of the second signal may include parameters such as the bandwidth, the slope, and the initial phase of the second signal.

Optionally, the capability information of the terminal device includes switching waiting time, a switching cycle, a first guard interval, and a second guard interval.

Optionally, the switching waiting time, the switching cycle, the first guard interval, and the second guard interval may be information preconfigured by the access network device and the terminal device. For example, the switching waiting time, the switching cycle, the first guard interval, and the second guard interval are specified in a communication protocol.

For descriptions of the switching waiting time, the switching cycle, the first guard interval, and the second guard interval, refer to the corresponding descriptions in the method 300. Details are not described herein again.

S630: The access network device sends switching indication information to the terminal device in the first transmit mode or the first transceiver mode, where the switching indication information indicates switching of the terminal device from the first transmit mode to the second transmit mode or switching of the terminal device from the first transceiver mode to the second transceiver mode. A first signal sent by the access network device in the first transmit mode or the first transceiver mode is for communication and sensing. The first signal includes the switching indication information.

It should be understood that the switching indication information sent by the access network device to the terminal device in the first transmit mode or the first transceiver mode may be response information that notifies the terminal device whether to perform switching. The access network device may determine, based on an operating status of the access network device, whether to respond to the mode switching request of the terminal device. For example, if the access network device receives only a mode switching request sent by a current terminal device, and another terminal device does not need to perform sensing, the access network device may not perform mode switching. For another example, if the access network device receives a mode switching request sent by a current terminal device, but capability information of the terminal device differs greatly from that of another terminal device, the access network device may not perform mode switching.

S640: The terminal device receives, in the first receive mode or the first transceiver mode, the switching indication information sent by the access network device.

S650: The terminal device switches the terminal device from the first transmit mode to the second transmit mode based on the switching indication information, or switches the terminal device from the first transceiver mode to the second transceiver mode.

Optionally, the switching indication information indicates only switching of the terminal device from the first transmit mode to the second transmit mode or switching of the terminal device from the first transceiver mode to the second transceiver mode. The terminal device switches the terminal device from the first transmit mode to the second transmit mode based on the switching waiting time, the switching cycle, and the first guard interval that are configured by using the communication protocol, locally stored by the terminal device, or used by default, or switches the terminal device from the first transceiver mode to the second transceiver mode.

Optionally, the switching indication information received by the terminal device may also indicate the terminal device not to perform mode switching.

It should be understood that a process of switching the terminal device from the first transmit mode to the second transmit mode or switching the terminal device from the first transceiver mode to the second transceiver mode in step S650 may be understood with reference to step S540. To avoid repetition, details are not described herein again.

S660: Switch the access network device from the first receive mode to the second receive mode, or switch the access network device from the first transceiver mode to the second transceiver mode.

For example, after sending the switching indication information to the terminal device, the access network device is switched to the second receive mode or the second transceiver mode based on the switching waiting time and the first guard interval.

It should be understood that a process of switching the access network device from the first receive mode to the second receive mode or switching the access network device from the first transceiver mode to the second transceiver mode in step S660 may be understood with reference to step S550. To avoid repetition, details are not described herein again.

S670: The terminal device sends the second signal to the access network device in the second transmit mode or the second transceiver mode.

S680: The access network device receives, in the second receive mode or the second transceiver mode, the second signal sent by the terminal device.

It should be understood that in step S680, a specific process in which the access network device receives, in the second receive mode or the second transceiver mode, the second signal sent by the terminal device may be understood with reference to step S570. To avoid repetition, details are not described herein again.

Therefore, the terminal device initiates operation mode switching, to switch the access network device from the first receive mode (a sensing and communication operation mode) to the second receive mode (a sensing operation mode) or switch the access network device from the first transceiver mode (a sensing and communication operation mode) to the second transceiver mode (a sensing operation mode), and switch the terminal device from the first transmit mode (a sensing and communication operation mode) to the second transmit mode (a sensing operation mode) or switch the terminal device from the first transceiver mode (the sensing and communication operation mode) to the second transceiver mode (the sensing operation mode). In this way, a communication system is compatible with the sensing and communication operation mode and the sensing operation mode, and system power consumption is reduced in the sensing operation mode.

Optionally, in step S620, the access network device may receive capability information of a plurality of terminal devices, and the access network device determines a first terminal device based on the capability information of the plurality of terminal devices and a current operating status of the access network device, where the first terminal device is a terminal device that is determined by the access network device to be switched from a first operation mode to the second operation mode. The first terminal device includes at least one terminal device. Correspondingly, in step S630, the access network device sends the switching indication information to the first terminal device in the first transmit mode or the first transceiver mode.

Optionally, the method 600 may further include: switching the access network device from the second receive mode or the second transceiver mode to the first receive mode or the first transceiver mode based on the second guard interval; and switching the terminal device from the second transmit mode or the second transceiver mode to the first transmit mode or the first transceiver mode based on the second guard interval.

Specifically, the access network device and the terminal device start timing of the second guard interval when the switching cycle expires. The access network device is switched from the second receive mode or the second transceiver mode to the first receive mode or the first transceiver mode in the second guard interval. The terminal device is switched from the second transmit mode or the second transceiver mode to the first transmit mode or the first transceiver mode in the second guard interval. When the second guard interval expires, the access network device is in the first receive mode or the first transceiver mode, and the terminal device is in the first transmit mode or the first transceiver mode.

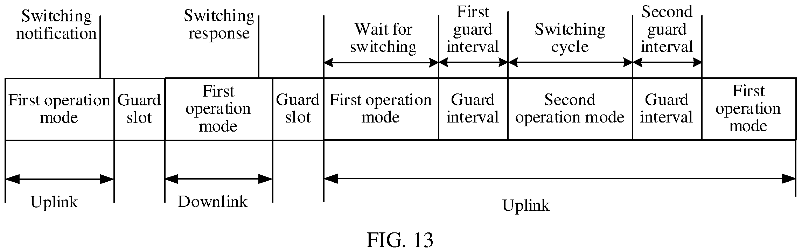

To describe a sequence process of the method 600 more clearly, the following uses FIG. 13 for description. FIG. 13 is a schematic sequence diagram of operation mode switching according to this application.

The terminal device initiates an operation mode switching notification in the first transmit mode or the first transceiver mode in an uplink direction (for example, the access network device receives, in the first operation mode, the capability information reported by the terminal device). Uplink communication ends, and downlink communication starts after a guard slot. The access network device sends a switching response message to the terminal device in the first transmit mode or the first transceiver mode in a downlink direction (for example, the access network device sends the switching indication information to the terminal device in the first operation mode). Downlink communication ends, and uplink communication starts after a guard slot. When a propagation delay is ignored, both the access network device and the terminal device enter the switching waiting time. When the switching waiting time expires, the access network device and the terminal device enter the first guard interval. When the first guard interval expires, the access network device is switched from the first receive mode to the second receive mode, or the access network device is switched from the first transceiver mode to the second transceiver mode, and the terminal device is switched from the first transmit mode to the second transmit mode, or the terminal device is switched from the first transceiver mode to the second receiver mode. When the switching cycle expires, the access network device and the terminal device enter the second guard interval. When the second guard interval expires, the access network device is switched from the second receive mode to the first receive mode, or the access network device is switched from the second transceiver mode to the first transceiver mode, and the terminal device is switched from the second transmit mode to the first transmit mode, or the terminal device is switched from the second transceiver mode to the first transceiver mode.

The foregoing is a process of switching the access network device and the terminal device between different operation modes in a TDD system. The following describes how to switch the access network device and the terminal device between different operation modes in an FDD system.

The following describes, by using embodiments, switching between different operation modes in the FDD system.

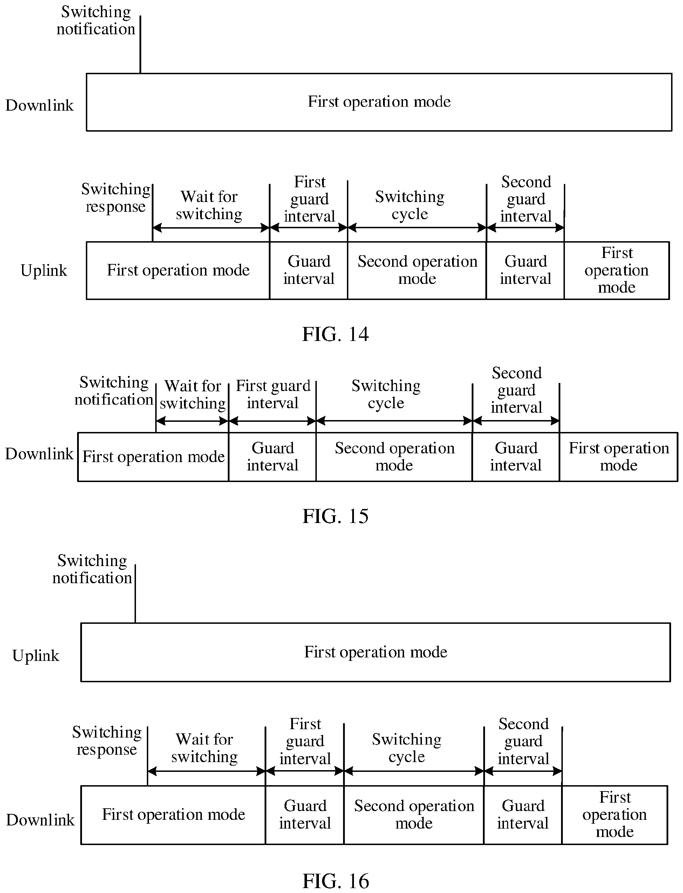

FIG. 14 is a schematic sequence diagram of operation mode switching in the FDD system according to this application.

The access network device initiates an operation mode switching notification in the first transmit mode or the first transceiver mode in a downlink direction (for example, the access network device sends the switching indication information to the terminal device in the first operation mode). After the terminal device receives the switching notification in the first receive mode or the first transceiver mode in the downlink direction, the terminal device sends a switching response message to the access network device in the first transmit mode or the first transceiver mode in an uplink direction, where the switching response message indicates the access network device to be switched from the first receive mode or the first transceiver mode to the second receive mode or the second transceiver mode. In a case in which the access network device and the terminal device are time-synchronized, when the terminal device sends the switching response message, and the access network device receives the switching response message, both the access network device and the terminal device enter the switching waiting time. When the switching waiting time expires, the access network device and the terminal device enter the first guard interval. The access network device starts to be switched from the first receive mode or the first transceiver mode to the second receive mode or the second transceiver mode, and the terminal device starts to be switched from the first transmit mode or the first transceiver mode to the second transmit mode or the second transceiver mode. When the first guard interval expires, the access network device operates in the second receive mode or the second transceiver mode, and the terminal device operates in the second transmit mode or the second transceiver mode. When the switching cycle expires, the access network device and the terminal device enter the second guard interval. The access network device starts to be switched from the second receive mode or the second transceiver mode to the first receive mode or the first transceiver mode, and the terminal device starts to be switched from the second transmit mode or the second transceiver mode to the first transmit mode or the first transceiver mode. When the second guard interval expires, the access network device operates in the first receive mode or the first transceiver mode, and the terminal device operates in the first transmit mode or the first transceiver mode.

FIG. 15 is a schematic sequence diagram of operation mode switching in the FDD system according to this application.

The transmitter of the access network device initiates an operation mode switching notification in the first transmit mode or the first transceiver mode in a downlink direction (for example, the access network device sends the switching indication information to the terminal device in the first transmit mode or the first transceiver mode). In a case in which the access network device and the terminal device are time-synchronized, when the access network device sends the switching notification, and the terminal device receives the switching notification, both the access network device and the terminal device enter the switching waiting time. When the switching waiting time expires, the access network device and the terminal device enter the first guard interval. The access network device starts to be switched from the first transmit mode or the first transceiver mode to the second transmit mode or the second transceiver mode, and the terminal device starts to be switched from the first receive mode or the first transceiver mode to the second receive mode or the second transceiver mode. When the first guard interval expires, the access network device operates in the second transmit mode or the second transceiver mode, and the terminal device operates in the second receive mode or the second transceiver mode. When the switching cycle expires, the access network device and the terminal device enter the second guard interval. The access network device starts to be switched from the second transmit mode or the second transceiver mode to the first transmit mode or the first transceiver mode, and the terminal device starts to be switched from the second receive mode or the second transceiver mode to the first receive mode or the first transceiver mode. When the second guard interval expires, the access network device operates in the first transmit mode or the first transceiver mode, and the terminal device operates in the first receive mode or the first transceiver mode.

FIG. 16 is a schematic sequence diagram of operation mode switching in the FDD system according to this application.

The terminal device initiates an operation mode switching notification in the first transmit mode or the first transceiver mode in an uplink direction (for example, the access network device receives, in the first operation mode, the capability information reported by the terminal device). The access network device sends a switching response message to the terminal device in the first transmit mode or the first transceiver mode in a downlink direction (for example, the access network device sends the switching indication information to the terminal device in the first operation mode). In a case in which the access network device and the terminal device are time-synchronized, when the access network device sends the switching response message, and the terminal device receives the switching response message, both the access network device and the terminal device enter the switching waiting time. When the switching waiting time expires, the access network device and the terminal device enter the first guard interval. The access network device starts to be switched from the first transmit mode or the first transceiver mode to the second transmit mode or the second transceiver mode, and the terminal device starts to be switched from the first receive mode or the first transceiver mode to the second receive mode or the second transceiver mode. When the first guard interval expires, the access network device operates in the second transmit mode or the second transceiver mode, and the terminal device operates in the second receive mode or the second transceiver mode. When the switching cycle expires, the access network device and the terminal device enter the second guard interval. The access network device starts to be switched from the second transmit mode or the second transceiver mode to the first transmit mode or the first transceiver mode, and the terminal device starts to be switched from the second receive mode or the second transceiver mode to the first receive mode or the first transceiver mode. When the second guard interval expires, the access network device operates in the first transmit mode or the first transceiver mode, and the terminal device operates in the first receive mode or the first transceiver mode.

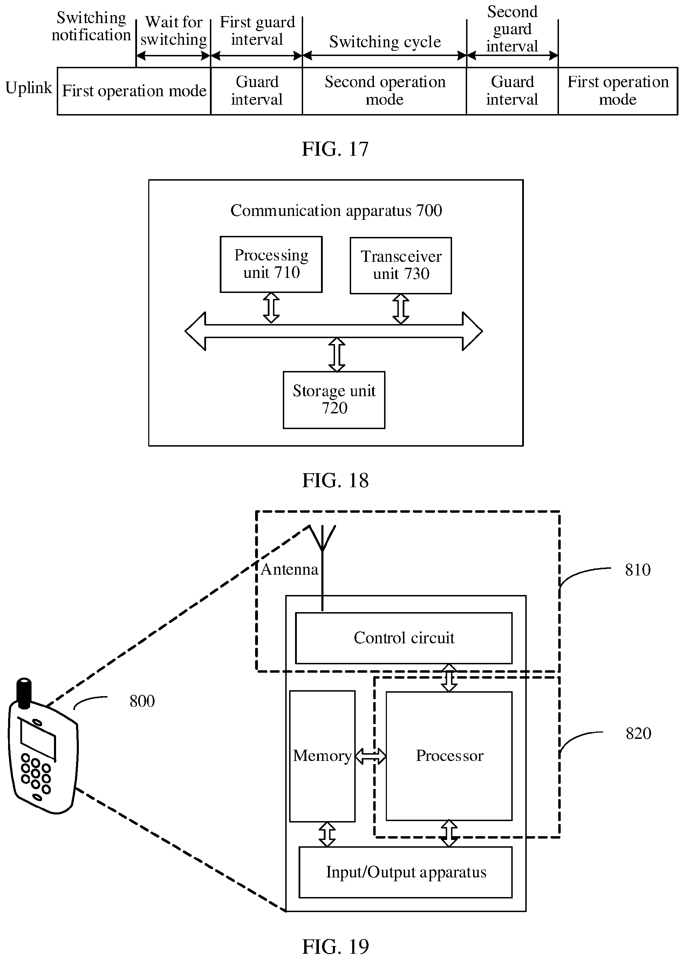

FIG. 17 is a schematic sequence diagram of operation mode switching in the FDD system according to this application.

The terminal device initiates an operation mode switching notification in the first transmit mode in an uplink direction. In a case in which the access network device and the terminal device are time-synchronized, when the terminal device sends the switching notification, and the access network device receives the switching notification, both the access network device and the terminal device enter the switching waiting time. When the switching waiting time expires, the access network device and the terminal device enter the first guard interval. The access network device starts to be switched from the first receive mode or the first transceiver mode to the second receive mode or the second transceiver mode, and the terminal device starts to be switched from the first transmit mode or the first transceiver mode to the second transmit mode or the second transceiver mode. When the first guard interval expires, the access network device operates in the second receive mode or the second transceiver mode, and the terminal device operates in the second transmit mode or the second transceiver mode. When the switching cycle expires, the access network device and the terminal device enter the second guard interval. The access network device starts to be switched from the second receive mode or the second transceiver mode to the first receive mode or the first transceiver mode, and the terminal device starts to be switched from the second transmit mode or the second transceiver mode to the first transmit mode or the first transceiver mode. When the second guard interval expires, the access network device operates in the first receive mode or the first transceiver mode, and the terminal device operates in the first transmit mode or the first transceiver mode.

In the TDD system, receiving and transmission are performed in different slots of a same frequency channel, that is, a carrier, and receiving and transmission channels are separated by using guaranteed time. In the FDD system, receiving and transmission are performed on two separate frequency channels, and receiving and transmission channels are separated by using a guaranteed frequency band. Therefore, in the FDD system, the access network device may operate in the second transmit mode, while the terminal device may operate in the second receive mode; the access network device may operate in the second receive mode, while the terminal device may operate in the second transmit mode; or the access network device operates in the second transmit mode, while the terminal device operates in the second receive mode, and in addition, the access network device operates in the second receive mode, while the terminal device operates in the second transmit mode.

It should be understood that in the FDD system, if the access network device operates in the second transmit mode, while the terminal device operates in the second receive mode, the terminal device may send trigger information to the access network device in the first transmit mode, where the trigger information indicates switching of the access network device from the second transmit mode to the first transmit mode. After the terminal device sends the trigger information, the terminal device is switched from the second receive mode to the first receive mode. The access network device receives the trigger information sent by the terminal device. The access network device is switched from the second transmit mode to the first transmit mode based on the trigger information.

It should be further understood that in the FDD system, if the access network device operates in the second receive mode, while the terminal device operates in the second transmit mode, the access network device may send a trigger message to the terminal device in the first transmit mode, to switch the terminal device from the second transmit mode to the first transmit mode and switch the access network device from the second receive mode to the first receive mode.

It should be further understood that in the FDD system, the switching waiting time, the first guard interval, the switching cycle, and the second guard interval may be understood with reference to the switching waiting time, the first guard interval, the switching cycle, and the second guard interval in the TDD system. Details are not described herein again.

It should be further understood that a specific method for switching between different operation modes in the FDD system may be understood with reference to that in the TDD system.

It should be further understood that in this embodiment of this application, the access network device may also be a terminal device, that is, switching between different operation modes may also be performed between different terminal devices by using the foregoing method.

The foregoing describes, in detail with reference to FIG. 1 to FIG. 17, a method for measuring a communication parameter of a multi-SIM terminal device according to embodiments of this application. The following describes in detail a communication apparatus in embodiments of this application with reference to FIG. 18 to FIG. 20.

FIG. 18 is a schematic block diagram of a communication apparatus 700 according to an embodiment of this application.

In some embodiments, the apparatus 700 may be a first communication apparatus, for example, an access network device, or may be a chip or a circuit, for example, a chip or a circuit that may be disposed in a first communication apparatus.

In some embodiments, the apparatus 700 may be a second communication apparatus, for example, a terminal device, or may be a chip or a circuit, for example, a chip or a circuit that may be disposed in a second communication apparatus.

In a possible manner, the apparatus 700 may include a processing unit 710 (that is, an example of a processor) and a transceiver unit 730. In some possible implementations, the processing unit 710 may also be referred to as a determining unit. In some possible implementations, the transceiver unit 730 may include a receiving unit and a sending unit.

Optionally, the transceiver unit 730 may be implemented by using a transceiver, a transceiver-related circuit, or an interface circuit.

Optionally, the apparatus may further include a storage unit 720. In a possible manner, the storage unit 720 is configured to store instructions. Optionally, the storage unit may also be configured to store data or information. The storage unit 720 may be implemented by using a memory.

In some possible designs, the processing unit 710 is configured to execute the instructions stored in the storage unit 720, so that the apparatus 700 implements the steps performed by the terminal device in the foregoing methods. Alternatively, the processing unit 710 may be configured to invoke the data in the storage unit 720, so that the apparatus 700 implements the steps performed by the terminal device in the foregoing methods.

In some possible designs, the processing unit 710 is configured to execute the instructions stored in the storage unit 720, so that the apparatus 700 implements the steps performed by the access network device in the foregoing methods. Alternatively, the processing unit 710 may be configured to invoke the data in the storage unit 720, so that the apparatus 700 implements the steps performed by the access network device in the foregoing methods.

For example, the processing unit 710, the storage unit 720, and the transceiver unit 730 may communicate with each other through an internal connection path, to transfer a control signal and/or a data signal. For example, the storage unit 720 is configured to store a computer program, and the processing unit 710 may be configured to invoke the computer program from the storage unit 720 and run the computer program, to control the transceiver unit 730 to receive a signal and/or send a signal, to complete the steps performed by the terminal device or the access network device in the foregoing methods. The storage unit 720 may be integrated into the processing unit 710, or may be disposed separately from the processing unit 710.

Optionally, if the apparatus 700 is a communication device (for example, a terminal device or an access network device), the transceiver unit 730 includes a receiver and a transmitter. The receiver and the transmitter may be a same physical entity or different physical entities. When the receiver and the transmitter are a same physical entity, the receiver and the transmitter may be collectively referred to as a transceiver.

Optionally, if the apparatus 700 is a chip or a circuit, the transceiver unit 730 includes an output interface and an input interface.

In an implementation, it may be considered that a function of the transceiver unit 730 is implemented by using a transceiver circuit or a dedicated transceiver chip. It may be considered that the processing unit 710 is implemented by using a dedicated processing chip, a processing circuit, a processing unit, or a general-purpose chip.

In some embodiments, the apparatus 700 may be the terminal device, or a chip or a circuit that is disposed in the terminal device.

When the apparatus 700 is the first communication apparatus, or the chip or the circuit that is disposed in the first communication apparatus, the processing unit 710 is configured to obtain capability information of a second communication apparatus, where the capability information indicates that the second communication apparatus supports one or more of a second transmit mode, a second receive mode, or a second transceiver mode. The transceiver unit 730 is configured to send switching indication information to the second communication apparatus based on the capability information, where the switching indication information indicates one or more of the following: switching of the second communication apparatus from a first transmit mode to the second transmit mode, switching of the second communication apparatus from a first receive mode to the second receive mode, or switching of the second communication apparatus from a first transceiver mode to the second transceiver mode. A first signal transmitted in any one of the first transmit mode, the first receive mode, or the first transceiver mode is for communication and sensing. A second signal transmitted in any one of the second transmit mode, the second receive mode, or the second transceiver mode is for sensing. The transceiver unit 730 is further configured to: send the second signal in the second transmit mode or the second transceiver mode, or receive the second signal in the second receive mode or the second transceiver mode.

Optionally, the capability information includes one or more of the following: a parameter of a received signal supported by the second communication apparatus, or a parameter of a sent signal supported by the second communication apparatus.

Optionally, the switching indication information includes a parameter of the second signal.

Optionally, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the switching indication information further includes any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the capability information may further include any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the processing unit 710 is further configured to switch the transceiver unit from the second transmit mode or the second transceiver mode to the first transmit mode or the first transceiver mode based on the second guard interval. Alternatively, the processing unit switches the transceiver unit from the second receive mode or the second transceiver mode to the first receive mode or the first transceiver mode based on the second guard interval.

Optionally, that the transceiver unit 730 is configured to send the second signal in the second transmit mode or the second transceiver mode includes: The transceiver unit corresponding to a first sector sends the second signal in the second transmit mode or the second transceiver mode. Alternatively, the transceiver unit corresponding to a first panel (panel) sends the second signal in the second transmit mode or the second transceiver mode. Alternatively, the transceiver unit corresponding to a first port (port) sends the second signal in the second transmit mode or the second transceiver mode.

Optionally, that the transceiver unit 730 receives the second signal in the second receive mode or the second transceiver mode includes: The transceiver unit corresponding to a first sector receives the second signal in the second receive mode or the second transceiver mode. Alternatively, the transceiver unit corresponding to a first panel (panel) receives the second signal in the second receive mode or the second transceiver mode. Alternatively, the transceiver unit corresponding to a first port (port) receives the second signal in the second receive mode or the second transceiver mode.

When the apparatus 700 is configured on the first communication apparatus or is the first communication apparatus, modules or units in the apparatus 700 may be configured to perform actions or processing processes performed by the first communication apparatus in the foregoing methods. To avoid repetition, detailed descriptions thereof are omitted herein.

In some embodiments, when the apparatus 700 may be the second communication apparatus, or the chip or the circuit that is disposed in the second communication apparatus, the transceiver unit 730 is configured to receive, in a first receive mode or a first transceiver mode, switching indication information sent by a first communication apparatus, where the switching indication information indicates one or more of the following: switching of the second communication apparatus from a first transmit mode to a second transmit mode, switching of the second communication apparatus from the first receive mode to a second receive mode, or switching of the second communication apparatus from the first transceiver mode to a second mode. A first signal transmitted in any one of the first transmit mode, the first receive mode, or the first transceiver mode is for communication and sensing. A second signal transmitted in any one of the second transmit mode, the second receive mode, or the second transceiver mode is for sensing. The processing unit 710 is configured to: switch the second communication apparatus from the first transmit mode to the second transmit mode based on the switching indication information, or switch the second communication apparatus from the first receive mode to the second receive mode, or switch the second communication apparatus from the first transceiver mode to the second mode. The transceiver unit 730 is further configured to: receive the second signal in the second receive mode or the second transceiver mode, or send the second signal in the second transmit mode or the second transceiver mode.

Optionally, the transceiver unit 730 is further configured to send capability information to the first communication apparatus, where the capability information indicates that the second communication apparatus supports one or more of the second transmit mode, the second receive mode, or the second transceiver mode.

Optionally, the capability information includes one or more of the following: a parameter of a received signal supported by the second communication apparatus, or a parameter of a sent signal supported by the second communication apparatus.

Optionally, the switching indication information includes a parameter of the second signal.

Optionally, switching waiting time, a switching cycle, a first guard interval, and a second guard interval are information preconfigured by the first communication apparatus and the second communication apparatus. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the switching indication information further includes any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the capability information may further include any one or more of the following parameters: switching waiting time, a switching cycle, a first guard interval, and a second guard interval. The switching waiting time is used to determine duration, before switching, of the first transmit mode or the first transceiver mode of the first communication apparatus and the first receive mode or the first transceiver mode of the second communication apparatus. Alternatively, the switching waiting time is used to determine duration, before switching, of the first receive mode or the first transceiver mode of the first communication apparatus and the first transmit mode or the first transceiver mode of the second communication apparatus. The switching cycle indicates duration of operation in a second operation mode. The first guard interval indicates an interval for switching from a first operation mode to the second operation mode. The second guard interval indicates an interval for switching from the second operation mode to the first operation mode. The second operation mode includes one or more of the second transmit mode, the second receive mode, or the second transceiver mode. The first operation mode includes one or more of the first transmit mode, the first receive mode, or the first transceiver mode.

Optionally, the processing unit 710 is further configured to switch the transceiver unit from the second receive mode or the second transceiver mode to the first receive mode or the first transceiver mode based on the second guard interval. Alternatively, the processing unit switches the transceiver unit from the second transmit mode or the second transceiver mode to the first transmit mode or the first transceiver mode based on the second guard interval.

Optionally, that the transceiver unit 730 is configured to receive the second signal in the second receive mode or the second transceiver mode includes: The transceiver unit corresponding to a first panel (panel) receives the second signal in the second operation mode or the second transceiver mode. Alternatively, the transceiver unit corresponding to a first port (port) receives the second signal in the second operation mode or the second transceiver mode.

Optionally, that the transceiver unit 730 is configured to send the second signal in the second transmit mode or the second transceiver mode includes: The transceiver unit corresponding to a first panel (panel) sends the second signal in the second operation mode or the second transceiver mode. Alternatively, the transceiver unit corresponding to a first port (port) sends the second signal in the second operation mode or the second transceiver mode.

When the apparatus 700 is configured on the second communication apparatus or is the second communication apparatus, modules or units in the apparatus 700 may be configured to perform actions or processing processes performed by the second communication apparatus in the foregoing methods. To avoid repetition, detailed descriptions thereof are omitted herein.

For concepts, explanations, detailed descriptions, and other steps of the apparatus 700 that are related to the technical solutions provided in embodiments of this application, refer to the descriptions of the content in the foregoing methods or other embodiments. Details are not described herein again.

FIG. 19 is a diagram of a structure of a terminal device 800 according to this application. The terminal device 800 may perform the actions performed by the terminal device in the foregoing method embodiments.

For ease of description, FIG. 19 shows only main components of the terminal device. As shown in FIG. 19, the terminal device 800 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device in performing the actions described in the method for switching between different operation modes in the foregoing embodiments. The processor may include the baseband, the analog-to-digital converter, and the intermediate frequency unit in FIG. 3 or FIG. 4. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The control circuit may include the radio frequency front end unit in FIG. 3 or FIG. 4. The input/output apparatus, for example, a touchscreen, a display, or a keyboard, is mainly configured to: receive data input by a user and output data to the user.

After the terminal device is powered on, the processor may read the software program in the storage unit in a form of, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in the form of an electromagnetic wave. When data is sent to the terminal device, the radio frequency circuit receives a radio frequency signal via the antenna, converts the radio frequency signal into a baseband signal, and outputs the baseband signal to the processor. The processor converts the baseband signal into data, and processes the data.

A person skilled in the art may understand that for ease of description, FIG. 19 shows only one memory and one processor. In an actual terminal device, there may be a plurality of processors and memories. The memory may also be referred to as a storage medium, a storage device, or the like. This is not limited in this embodiment of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 19. A person skilled in the art may understand that the baseband processor and the central processing unit each may be an independent processor, and are interconnected by using technologies such as a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a receiving function and a sending function may be considered as a transceiver unit 810 of the terminal device 800, and the processor having a processing function may be considered as a processing unit 820 of the terminal device 800. As shown in FIG. 19, the terminal device 800 includes the transceiver unit 810 and the processing unit 820. The transceiver unit may also be referred to as a transceiver, a transceiver machine, a transceiver apparatus, or the like. Optionally, a component that is in the transceiver unit 810 and that is configured to implement the receiving function may be considered as a receiving unit, and a component that is in the transceiver unit 810 and that is configured to implement the sending function may be considered as a sending unit. In other words, the transceiver unit includes the receiving unit and the sending unit. For example, the receiving unit may also be referred to as a receiver, a receive machine, or a receiving circuit, and the sending unit may also be referred to as a transmitter, a transmit machine, or a transmitting circuit.

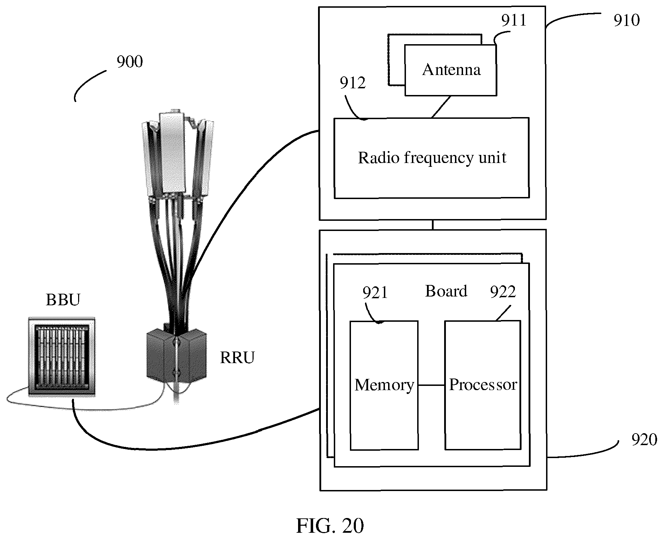

FIG. 20 is a diagram of a structure of an access network device 900 according to an embodiment of this application. The access network device 900 may be configured to implement a function of the access device in the foregoing methods. The access network device 900 includes one or more radio frequency units such as a remote radio unit (remote radio unit, RRU) 910, and one or more baseband units (baseband units, BBUs) (which may also be referred to as digital units DU) 920. The RRU 910 may be referred to as a transceiver unit, a transceiver, a transceiver circuit, a transceiver machine, or the like, and may include at least one antenna 920 and a radio frequency unit 912. The RRU 910 is mainly configured to send and receive a radio frequency signal, and perform conversion between the radio frequency signal and a baseband signal, for example, is configured to send the signaling messages in the foregoing embodiments to a terminal device. The BBU 920 is mainly configured to perform baseband processing, control a base station, and the like. The RRU 910 and the BBU 920 may be physically disposed together, or may be physically separated, that is, in a distributed base station.

The BBU 920 is a control center of the base station, and is also referred to as a processing unit, mainly configured to implement a baseband processing function such as channel encoding, multiplexing, modulation, and spectrum spreading. For example, the BBU (the processing unit) 920 may be configured to control a base station 40 to perform an operation procedure related to the access network device in the foregoing method embodiments.

In an example, the BBU 920 may include one or more boards, and a plurality of boards may jointly support a radio access network (for example, an LTE system or a 5G system) of a single access standard, or may separately support radio access networks of different access standards. The BBU 920 further includes a memory 921 and a processor 922. The memory 921 is configured to store necessary instructions and data. For example, the memory 921 stores the codebook and the like in the foregoing embodiments. The processor 922 is configured to control the base station to perform a necessary action, for example, is configured to control the base station to perform the operation procedure related to the access network device in the foregoing method embodiments. The memory 921 and the processor 922 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some functions of the parts 920 and 910 may be implemented by using the SoC technology, for example, implemented by using one base station function chip. The base station function chip integrates components such as a processor, a memory, and an antenna port. A program of a base station-related function is stored in the memory, and the processor executes the program to implement the base station-related function. Optionally, the base station function chip can also read from an external memory of the chip, to implement the base station-related function.

A 5G access network device generally uses an active antenna unit (active antenna unit, AAU), that is, the BBU and the RRU may be integrated into the AAU.

It should be understood that the structure of the access network device shown in FIG. 20 is merely a possible form, and should not constitute any limitation on embodiments of this application. In this application, a possibility that there may be a base station structure in another form in the future is not excluded.

It should be understood that in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof.

When software is used to implement embodiments, all or some of the foregoing embodiments may be implemented in a form of a computer program product.

An embodiment of this application further provides a computer program product. When the computer program product is executed by a computer, the steps performed by the terminal device or the steps performed by the access network device in any one of the foregoing embodiments are implemented. The computer program product includes one or more computer instructions or computer programs. When the program instructions or the computer programs are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner.

When the foregoing embodiment is implemented in a form of a software functional unit and sold or used as an independent product, the foregoing embodiment may be stored in a computer-readable storage medium.

An embodiment of this application further provides a computer-readable medium. The computer-readable medium stores a computer program. When the computer program is executed by a computer, the steps performed by the terminal device or the steps performed by the access network device in any one of the foregoing embodiments are implemented. The computer-readable storage medium may be any usable medium accessible by the computer, or a data storage device, such as a server or a data center, integrating one or more usable media. The usable medium may be a magnetic medium (for example, a USB flash drive, a floppy disk, a hard disk, and a magnetic tape), an optical medium (for example, a digital versatile disc (digital versatile disc, DVD)), or a semiconductor medium. The semiconductor medium may be a solid-state drive.

An embodiment of this application further provides a system chip. The system chip includes a communication unit and a processing unit. The processing unit may be, for example, a processor. The communication unit may be, for example, a communication interface, an input/output interface, a pin, or a circuit. The processing unit may execute computer instructions, so that a chip in a communication apparatus performs the steps performed by the terminal device or the steps performed by the access network device provided in the foregoing embodiments of this application.

Optionally, the chip is connected to a transceiver through the communication interface.

Optionally, the computer instructions are stored in a storage unit.

According to the method provided in embodiments of this application, an embodiment of this application further provides a communication system, including the foregoing access network device and terminal device.

Embodiments of this application may be used alone or used in combination. This is not limited herein.

In addition, aspects or features of this application may be implemented as a method, an apparatus, or a product that uses a standard programming and/or engineering technology. The term "product" used in this application covers a computer program that can be accessed from any computer-readable component, carrier or medium. For example, the computer-readable medium may include but is not limited to a magnetic storage device (for example, a hard disk, a floppy disk, or a magnetic tape), an optical disc (for example, a compact disc (compact disc, CD) or a DVD), a smart card, a flash memory device, a card, a stick, a key drive, or the like. In addition, various storage media described in this specification may represent one or more devices and/or other machine-readable media that are configured to store information. The term "machine-readable medium" may include but is not limited to a radio channel, and various other media that can store, contain and/or carry instructions and/or data.

It should be understood that "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least one of A and B" is similar to "A and/or B", describes the association relationship between the associated objects, and represents that there may be three relationships. For example, at least one of A and B may represent the following three cases: Only A exists, both A and B exist, and only B exists.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements, to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An operation mode switching method, comprising:
obtaining, by a first communication apparatus, capability information of a second communication apparatus, wherein the capability information indicates that the second communication apparatus supports one or more of a second transmit mode, a second receive mode, or a second transceiver mode;
sending, by the first communication apparatus, switching indication information to the second communication apparatus based on the capability information, wherein the switching indication information indicates one or more of the following: switching of the second communication apparatus from a first transmit mode to the second transmit mode, switching of the second communication apparatus from a first receive mode to the second receive mode, or switching of the second communication apparatus from a first transceiver mode to the second transceiver mode, wherein
a first signal transmitted in any one of the first transmit mode, the first receive mode, or the first transceiver mode is for communication and sensing, and a second signal transmitted in any one of the second transmit mode, the second receive mode, or the second transceiver mode is for sensing; and
sending, by the first communication apparatus, the second signal in the second transmit mode or the second transceiver mode, or receiving the second signal in the second receive mode or the second transceiver mode.

2. The switching method according to claim 1, wherein the capability information comprises one or more of the following: a parameter of a received signal supported by the second communication apparatus, or a parameter of a sent signal supported by the second communication apparatus.

3. The switching method according to claim 1 or 2, wherein the switching indication information comprises a parameter of the second signal.

4. The switching method according to claim 3, wherein the switching indication information further comprises any one or more of the following parameters:
switching waiting time, a switching cycle, a first guard interval, or a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in a second operation mode, the first guard interval indicates an interval for switching from a first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

5. The switching method according to claim 2, wherein the capability information may further comprise any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

6. The switching method according to claim 4 or 5, wherein the switching method further comprises:
switching the first communication apparatus from the second transmit mode or the second transceiver mode to the first transmit mode or the first transceiver mode based on the second guard interval, or switching the first communication apparatus from the second receive mode or the second transceiver mode to the first receive mode or the first transceiver mode based on the second guard interval.

7. The switching method according to any one of claims 1 to 6, wherein the sending, by the first communication apparatus, the second signal in the second transmit mode or the second transceiver mode comprises:
sending, by a first sector of the first communication apparatus, the second signal in the second transmit mode or the second transceiver mode; or
sending, by a first panel of the first communication apparatus, the second signal in the second transmit mode or the second transceiver mode; or
sending, by a first port of the first communication apparatus, the second signal in the second transmit mode or the second transceiver mode.

8. The switching method according to any one of claims 1 to 6, wherein the receiving, by the first communication apparatus, the second signal in the second receive mode or the second transceiver mode comprises:
receiving, by a first sector of the first communication apparatus, the second signal in the second receive mode or the second transceiver mode; or
receiving, by a first panel of the first communication apparatus, the second signal in the second receive mode or the second transceiver mode; or
receiving, by a first port of the first communication apparatus, the second signal in the second receive mode or the second transceiver mode.

9. A method for switching between different operation modes, comprising:
receiving, by a second communication apparatus in a first receive mode or a first transceiver mode, switching indication information sent by a first communication apparatus, wherein the switching indication information indicates one or more of the following: switching of a second communication apparatus from a first transmit mode to a second transmit mode, switching of the second communication apparatus from a first receive mode to a second transceiver mode, or switching of the second communication apparatus from the first transceiver mode to the second mode, wherein
a first signal transmitted in any one of the first transmit mode, the first receive mode, or the first transceiver mode is for communication and sensing, and a second signal transmitted in any one of the second transmit mode, the second receive mode, or the second transceiver mode is for sensing;
switching, by the second communication apparatus, the second communication apparatus from the first transmit mode to the second transmit mode based on the switching indication information, or switching the second communication apparatus from the first receive mode to the second receive mode, or switching the second communication apparatus from the first transceiver mode to the second mode; and
receiving, by the second communication apparatus, the second signal in the second receive mode or the second transceiver mode, or sending the second signal in the second transmit mode or the second transceiver mode.

10. The method for switching according to claim 9, wherein before the receiving, by a second communication apparatus in a first receive mode or a first transceiver mode, switching indication information sent by a first communication apparatus, the method for switching further comprises:
sending, by the second communication apparatus, capability information to the first communication apparatus, wherein the capability information indicates that the second communication apparatus supports one or more of the second transmit mode, the second receive mode, or the second transceiver mode.

11. The method for switching according to claim 9 or 10, wherein the capability information comprises one or more of the following: a parameter of a received signal supported by the second communication apparatus, or a parameter of a sent signal supported by the second communication apparatus.

12. The method for switching according to any one of claims 9 to 11, wherein the switching indication information comprises a parameter of the second signal.

13. The method for switching according to claim 12, wherein the switching indication information further comprises any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

14. The method for switching according to claim 10 or 11, wherein the capability information may further comprise any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

15. The method for switching according to claim 13 or 14, wherein the method for switching further comprises:
switching, by the second communication apparatus, the second communication apparatus from the second receive mode or the second transceiver mode to the first receive mode or the first transceiver mode based on the second guard interval; or switching, by the second communication apparatus, the second communication apparatus from the second transmit mode or the second transceiver mode to the first transmit mode or the first transceiver mode based on the second guard interval.

16. The method for switching according to any one of claims 9 to 15, wherein the receiving, by the second communication apparatus, the second signal in the second receive mode or the second transceiver mode comprises:
receiving, by a first panel of the second communication apparatus, the second signal in the second receive mode or the second transceiver mode; or
receiving, by a first port of the second communication apparatus, the second signal in the second receive mode or the second transceiver mode.

17. The method for switching according to any one of claims 9 to 15, wherein the sending, by the second communication apparatus, the second signal in the second transmit mode or the second transceiver mode comprises:
sending, by a first panel of the second communication apparatus, the second signal in the second transmit mode or the second transceiver mode; or
sending, by a first port of the second communication apparatus, the second signal in the second transmit mode or the second transceiver mode.

18. A first communication apparatus, comprising:
a processing unit, configured to obtain capability information of a second communication apparatus, wherein the capability information indicates that the second communication apparatus supports one or more of a second transmit mode, a second receive mode, or a second transceiver mode; and
a transceiver unit, configured to send switching indication information to the second communication apparatus based on the capability information, wherein the switching indication information indicates one or more of the following: switching of the second communication apparatus from a first transmit mode to the second transmit mode, switching of the second communication apparatus from a first receive mode to the second receive mode, or switching of the second communication apparatus from a first transceiver mode to the second mode, wherein
a first signal transmitted in any one of the first transmit mode, the first receive mode, or the first transceiver mode is for communication and sensing, and a second signal transmitted in any one of the second transmit mode, the second receive mode, or the second transceiver mode is for sensing; and
the transceiver unit is further configured to: send the second signal in the second transmit mode or the second transceiver mode, or receive the second signal in the second receive mode or the second transceiver mode.

19. The first communication apparatus according to claim 18, wherein the capability information comprises one or more of the following: a parameter of a received signal supported by the second communication apparatus, or a parameter of a sent signal supported by the second communication apparatus.

20. The first communication apparatus according to claim 18 or 19, wherein the switching indication information comprises a parameter of the second signal.

21. The first communication apparatus according to claim 20, wherein the switching indication information further comprises any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

22. The first communication apparatus according to claim 19, wherein the capability information may further comprise any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

23. The first communication apparatus according to claim 21 or 22, wherein the processing unit is further configured to:
switch the transceiver unit from the second transmit mode or the second transceiver mode to the first transmit mode or the first transceiver mode based on the second guard interval; or the processing unit switches the transceiver unit from the second receive mode or the second transceiver mode to the first receive mode or the first transceiver mode based on the second guard interval.

24. The first communication apparatus according to any one of claims 18 to 23, wherein that the transceiver unit is configured to send the second signal in the second transmit mode or the second transceiver mode comprises:
the transceiver unit corresponding to a first sector sends the second signal in the second transmit mode or the second transceiver mode; or
the transceiver unit corresponding to a first panel sends the second signal in the second transmit mode or the second transceiver mode; or
the transceiver unit corresponding to a first port sends the second signal in the second transmit mode or the second transceiver mode.

25. The first communication apparatus according to any one of claims 18 to 23, wherein that the transceiver unit receives the second signal in the second receive mode or the second transceiver mode comprises:
the transceiver unit corresponding to a first sector receives the second signal in the second receive mode or the second transceiver mode; or
the transceiver unit corresponding to a first panel receives the second signal in the second receive mode or the second transceiver mode; or
the transceiver unit corresponding to a first port receives the second signal in the second receive mode or the second transceiver mode.

26. A second communication apparatus, comprising:
a transceiver unit, configured to receive, in a first receive mode or a first transceiver mode, switching indication information sent by a first communication apparatus, wherein the switching indication information indicates one or more of the following: switching of the second communication apparatus from a first transmit mode to the second transmit mode, switching of the second communication apparatus from the first receive mode to the second receive mode, or switching of the second communication apparatus from the first transceiver mode to the second mode, wherein
a first signal transmitted in any one of the first transmit mode, the first receive mode, or the first transceiver mode is for communication and sensing, and a second signal transmitted in any one of the second transmit mode, the second receive mode, or the second transceiver mode is for sensing; and
a processing unit, configured to: switch the second communication apparatus from the first transmit mode to the second transmit mode based on the switching indication information, or switch the second communication apparatus from the first receive mode to the second receive mode, or switch the second communication apparatus from the first transceiver mode to the second mode, wherein
the transceiver unit is further configured to: receive the second signal in the second receive mode or the second transceiver mode, or send the second signal in the second transmit mode or the second transceiver mode.

27. The second communication apparatus according to claim 26, wherein the transceiver unit is further configured to:
send capability information to the first communication apparatus, wherein the capability information indicates that the second communication apparatus supports one or more of the second transmit mode, the second receive mode, or the second transceiver mode.

28. The second communication apparatus according to claim 26 or 27, wherein the capability information comprises one or more of the following: a parameter of a received signal supported by the second communication apparatus, or a parameter of a sent signal supported by the second communication apparatus.

29. The second communication apparatus according to any one of claims 26 to 28, wherein the switching indication information comprises a parameter of the second signal.

30. The second communication apparatus according to claim 29, wherein the switching indication information further comprises any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

31. The second communication apparatus according to claim 27 or 28, wherein the capability information may further comprise any one or more of the following parameters:
switching waiting time, a switching cycle, a first guard interval, and a second guard interval;
the switching waiting time is used to determine duration, before switching, of the first transmit mode or the first transceiver mode of the first communication apparatus and the first receive mode or the first transceiver mode of the second communication apparatus, or the switching waiting time is used to determine duration, before switching, of the first receive mode or the first transceiver mode of the first communication apparatus and the first transmit mode or the first transceiver mode of the second communication apparatus; and
the switching cycle indicates duration of operation in the second operation mode, the first guard interval indicates an interval for switching from the first operation mode to the second operation mode, the second guard interval indicates an interval for switching from the second operation mode to the first operation mode, the second operation mode comprises one or more of the second transmit mode, the second receive mode, or the second transceiver mode, and the first operation mode comprises one or more of the first transmit mode, the first receive mode, or the first transceiver mode.

32. The second communication apparatus according to claim 30 or 31, wherein the processing unit is further configured to:
switch the transceiver unit from the second receive mode or the second transceiver mode to the first receive mode or the first transceiver mode based on the second guard interval; or the processing unit switches the transceiver unit from the second transmit mode or the second transceiver mode to the first transmit mode or the first transceiver mode based on the second guard interval.

33. The second communication apparatus according to any one of claims 26 to 32, wherein that the transceiver unit is configured to receive the second signal in the second receive mode or the second transceiver mode comprises:
the transceiver unit corresponding to a first panel receives the second signal in the second operation mode or the second transceiver mode; or
the transceiver unit corresponding to a first port receives the second signal in the second operation mode or the second transceiver mode.

34. The second communication apparatus according to any one of claims 26 to 32, wherein that the second communication apparatus sends the second signal in the second transmit mode or the second transceiver mode comprises:
the transceiver unit corresponding to a first panel sends the second signal in the second operation mode or the second transceiver mode; or
the transceiver unit corresponding to a first port sends the second signal in the second operation mode or the second transceiver mode.

35. A computer-readable storage medium, wherein the computer-readable storage medium stores a computer program, and when the computer program is run, the operation mode switching method according to any one of claims 1 to 8 or the operation mode switching method according to any one of claims 9 to 17 is implemented.

36. A chip, comprising a processor and an interface, wherein
the processor is configured to read instructions to perform the method for switching between different operation modes according to any one of claims 1 to 8 or the method for switching between different operation modes according to any one of claims 9 to 17.

37. A computer program product comprising instructions, wherein when the instructions are run on a computer, the operation mode switching method according to any one of claims 1 to 8 is performed, or the operation mode switching method according to any one of claims 9 to 17 is performed.

38. A communication system, comprising the first communication apparatus according to any one of claims 18 to 25 and the second communication apparatus according to any one of claims 26 to 34.
